# FASCICULE DE BREVET EUROPEEN

(11) **EP 4 077 466 B1**
(45) Date de publication et mention de la délivrance du brevet: **20.12.2023**
(21) Numéro de dépôt: 20848859.3
(22) Date de dépôt: 18.12.2020
(51) Int. Cl.: C08G 61/12, C08G 65/40

(54) **PROCÉDÉ DE FABRICATION D'UN DIÉTHER AROMATIQUE ET PROCÉDÉS CORRESPONDANTS DE FABRICATION DE POLY-ARYL-ÉTHER-CÉTONES**
VERFAHREN ZUR HERSTELLUNG EINES AROMATISCHEN DIETHERS UND ENTSPRECHENDE VERFAHREN ZUR HERSTELLUNG VON POLYARYLETHERKETONEN
METHOD FOR PRODUCING AN AROMATIC DIETHER AND CORRESPONDING METHODS FOR PRODUCING POLYARYLETHERKETONES

(30) Priorité: 20.12.2019 FR 1915347
(43) Date de publication de la demande: 26.10.2022
(73) Titulaire: ARKEMA FRANCE, 92700 Colombes (FR)
(72) Inventeur: BUSSI, Philippe, 92705 COLOMBES CEDEX (FR); LE, Guillaume, 27470 SERQUIGNY (FR); GAUMONT, Anne-Claude, 14050 CAEN CEDEX (FR); ALBADRI, Hashim, 14050 CAEN CEDEX (FR)
(74) Mandataire: Arkema Patent
(86) Numéro de dépôt international: PCT/FR2020/052563
(87) Numéro de publication internationale: WO 2021/123688

(56) Documents cités:
- EP-A1- 2 105 430
- DE-A1- 4 424 036
- KE, Y.: "Investigations of the practical routes, structure, and properties for poly(aryl ether ketone ketone) polymers", J. APPL. POLYM. SCI., vol. 67, 1998, pages 659-677, XP002800006, cité dans la demande
- MANI R S ET AL: "SYNTHESIS AND CHARACTERIZATION OF ISOMERIC BIPHENYL-CONTAINING POLY(ARYL ETHER BISKETONE)S,. \3 POLYMERS DERIVED FROM 3,4'-BIS(4-FLUOROBENZOYL)BIPHENYL AND BISPHENOLS", MAKROMOL. CHEM AND PHYSICS, WILEY, vol. 194, no. 7, 1 juillet 1993 (1993-07-01), pages 1935-1951, XP000369793, ISSN: 0025-116X, DOI: 10.1002/MACP.1993.021940708

## Description

### Domaine technique

L'invention concerne un procédé de fabrication de diéther(s) aromatique(s). L'invention concerne également un procédé de fabrication de poly-aryl-éther-cétones à partir de certains au moins de ces diéthers aromatiques.

### Art antérieur

Il est connu de l'art antérieur différents procédés industriels de fabrication de poly-aryl-éther-cétones, tels les poly-éther-éther-cétones, les poly-éther-cétone-cétones, ou encore les copolymères de poly-éther-éther-cétones et de poly-éther-diphényl-éther-cétones.

Une première voie connue pour la fabrication de polymères de poly-aryl-éther-cétones repose sur une substitution nucléophile et a par exemple été décrite dans WO 86/07599. Le procédé consiste en la polycondensation d'un monomère difluoré avec un monomère comprenant deux fonctions phénols dans un solvant, par exemple la diphénylsulfone, à des températures élevées (comprises entre 280°C et 320°C)

Une seconde voie connue repose sur une réaction de substitution électrophile entre des chlorures d'acide aromatique et des éthers aromatiques en présence d'un acide de Lewis, et a par exemple été décrite dans US 4,816,556. En particulier, le procédé de fabrication de poly-éther-cétone-cétones peut se baser sur le diphényl éther, ou alternativement sur le 1 ,4-bis(4-phénoxybenzoyl)benzène, comme monomère de départ à la réaction de polymérisation. Dans US 4,816,556, le 1 ,4-bis (4-phénoxybenzoylbenzène) a été synthétisé par substitution électrophile entre du chlorure de téréphtaloyle et du diphényl éther en excès en présence de trichlorure d'aluminium (acide de Lewis) dans l'ortho-dichlorobenzène (solvant).

Il est également connu de Ke, Y. & al. (1998), Investigations of the practical routes, structure, and properties for poly(aryl éther ketone ketone) polymers. J. Appl. Polym. Sci., 67: 659-677. doi:10.1002/(SICI)1097-4628(19980124)67:4<659::AID-APP9>3.0.CO;2-P, un procédé expérimental de fabrication de 1,4-bis(4-phénoxybenzoyl)benzène, fabriqué par voie nucléophile. Dans cette publication, le procédé a été mis en oeuvre par mélange de 0,10 mol d'un composé de formule (I) : 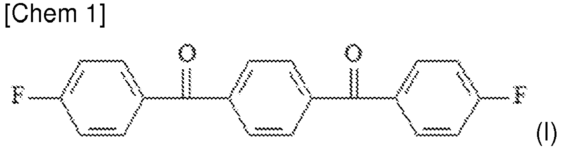 , 0,20 mol de phénol et, 0,3 mol de carbonate de potassium anhydre dans 270 mL de diméthylacétamide et 60 mL de toluène, sous agitation et atmosphère de diazote. Le mélange est chauffé progressivement pendant 1 heure jusqu'à atteindre une température de 158°C. L'eau résiduelle du mélange réactionnel est éliminée. Le mélange réactionnel est maintenu à une température de 158°C pendant 1 heure, puis à une température de 162° C pendant 2 heures. Le milieu réactionnel est ensuite versé dans de l'eau pure et le précipité est filtré et séché à l'air pendant une durée de 24 heures à 108°C. Deux recristallisations dans le toluène sont effectuées et un produit ayant un point de fusion de 224°C est obtenu avec un rendement de 90%, sans que ne soit indiqué de pureté. La littérature indique cependant que le point de fusion du 1,4-bis(4-phénoxybenzoyl)benzène devrait être de 215°C. Ce procédé présente en outre plusieurs inconvénients : il utilise des quantités importantes de solvants, notamment de diméthylacétamide, qui présentent un risque pour la santé humaine car nocif (par contact/inhalation) et CMR (peut nuire au foetus). De plus, le diméthylacétamide a un point d'ébullition élevé (165°C) ce qui rend l'étape de séchage du produit obtenu compliquée. Enfin, l'eau produite au cours de la réaction est soluble dans le diméthylacétamide mais en est difficilement séparable, ce qui rend le recyclage du solvant pour être réutilisé dans des procédés ultérieurs compliqué.

### Objectifs

L'invention a pour objectif de proposer un procédé amélioré de fabrication de diéther(s) aromatique(s), pouvant notamment être déployé à une échelle industrielle.

Selon certains modes de réalisation, l'invention a pour objectif de proposer un procédé permettant de fabriquer des diéther(s) aromatique(s) de haute pureté et avec un rendement élevé.

L'invention a également comme objectif de proposer un procédé amélioré de fabrication de poly-aryl-éther-cétone à partir desdits diéthers aromatiques.

### Présentation de l'invention

L'invention concerne un procédé de fabrication d'un diéther aromatique comprenant la réaction d'un composé A comprenant au moins deux groupements aromatiques halogénés avec un composé B, B étant un alcoolate aromatique, optionnellement en présence d'un composé C jouant le rôle de solvant de réaction. La proportion molaire de composé B par rapport au composé A est d'au moins 2 :1 et la quantité molaire de composé C par rapport au composé A est, le cas échéant, au plus égale à 10:1.

Ce procédé permet d'obtenir des diéthers aromatiques dans un mélange réactionnel très concentré, voire en masse, ce qui permet d'optimiser la productivité volumique (quantité de matière produite par unité de volume d'un équipement). En outre, les inventeurs ont remarqué que, de manière extrêmement surprenante, le procédé permettait d'obtenir le diéther aromatique avec un rendement, au moins équivalent, et dans de nombreux cas meilleur, que celui de procédés selon l'art antérieur et avec une bonne pureté.

Dans certains modes de réalisation, le composé A est un composé ayant pour formule chimique :
[Chem 2]

X₁-Ar-[Zᵢ-Arᵢ]ₙ-X₂ (II),

dans laquelle :
i est un entier allant de de 1 à 3 et n est un entier égal à 0 ou 1 ;
X₁ et X₂ désignent indépendamment un atome d'halogène ;
Ar et pour tout i, Arᵢ, désignent indépendamment un groupe aromatique divalent, substitué ou non ; et,
pour tout i, Zᵢ désigne indépendamment un atome d'oxygène, un atome de soufre, un groupe alkylène, tel que -CH₂- ou isopropylène (-C(CH₃)₂-), un groupe carbonyle ou un groupe sulfonyle.

Préférentiellement, X₁ et X₂ désignent un même atome d'halogène. Encore plus préférentiellement, ils désignent tous les deux un chlore ou un fluor. Préférentiellement Ar et pour tout i, Arᵢ, désignent indépendamment un groupe aromatique divalent choisi parmi la liste constituée de : 1,3-phénylène, 1,4-phénylène,1,1 '-biphényle divalent en positions 4,4', 1,1'-biphényle divalent en positions 3,4', 1,4-naphthylène, 1,5-naphthylène et 2,6-naphthylène, et encore préférentiellement désignent indépendamment le 1,3-phénylène et le 1,4-phénylène.

Préférentiellement pour tout i, Zᵢ désigne indépendamment un atome d'oxygène ou un groupe carbonyle, et encore plus préférentiellement désigne un groupe carbonyle.

Selon certains modes de réalisations, dans la formule (II) du composé A :
- i est égal à 2 et n est égal à 1 ;
- X₁ et X₂ désignent tous les deux un atome de chlore ou un atome de fluor;
- Ar et Ar₂ désignent tous les deux un groupe 1,4-phénylène ;
- Ar₁ désigne un groupe 1,3-phénylène ou 1,4-phénylène ; et
- Z₁ et Z₂ désignent tous les deux un groupe carbonyle.

Dans certains modes de réalisation, le composé B a pour formule chimique : Ar'-O- (III), dans laquelle :
Ar' désigne un groupe aromatique monovalent, substitué ou non, préférentiellement désigne un groupe aromatique monovalent choisi parmi la liste constituée de : phényle, biphényle et naphthylène. Le composé B peut notamment être le phénolate.

Dans certains modes de réalisation, la proportion molaire de composé B par rapport au composé A est inférieure ou égale à 3 :1, préférentiellement inférieure ou égale à 2,5 :1, encore préférentiellement inférieure ou égale à 2,3 :1, et de manière extrêmement préférée d'environ 2 :1.

Selon certains modes de réalisation, le composé B est obtenu par déprotonation de l'alcool aromatique B", acide conjugué de l'alcoolate aromatique B, par une base mise à réagir avec B", in-situ ou non, pour fournir le composé B, ladite base étant préférentiellement choisie parmi la liste constituée de : sels d'alcoolates, aromatiques ou aliphatiques, sels de carbonates, hydrures métalliques, et métaux alcalins.

La base mise à réagir avec B" peut notamment être un sel d'alcoolate, linéaire ou ramifié, comprenant de 3 à 10 atomes de carbone. Préférentiellement, ladite base est choisie dans la liste constituée des sels de :
iso-propanolate, 1,2-diméthylpropanolate, 1,1-diméthylpropanolate, 2,2-diméthylpropanolate, 1,1,2-triméthylpropanolate, 1,2,2-tri-méthylpropanolate, 1-éthyl-2-methylpropanolate, 1-éthylpropanolate, n-butanolate, iso-butanolate, sec-butanolate, tert-butanolate, 2-méthylbutanolate, 3-méthylbutanolate, 1,2-diméthylbutanolate, 1,3-diméthylbutanolate, 2,3-diméthylbutanolate, 1,1-diméthyl-butanolate, 2,2-diméthylbutanolate, 3,3-diméthylbutanolate, 1-éthylbutanolate, 2-éthylbutanolate, 1-propylbutanolate, 1,1,3,3-tétraméthylbutanolate, n-pentanolate, 2-pentanolate, 2-methylpentanolate, n-hexanolate, 2-hexanolate, 3-méthylpentanolate, 4-méthyl-pentanolate, 2-éthylpentanolate, 2-éthylhexanolate, 2-propylheptanolate, n-heptanolate, 2-heptanolate, 3-heptanolate, n-octanolate, et leur mélange ;
encore préférentiellement ladite base peut être choisie parmi la liste des sels d'iso-propanolate, de n-butanolate, de tert-butanolate, de n-heptanolate, de n-octanol, et leur mélange.

La base mise à réagir avec B" peut également être un sel de carbonate.

La base mise à réagir avec B" peut notamment être un sel de métal alcalin. Préférentiellement, la base est un sel de sodium, de potassium ou un mélange de sels de sodium et potassium.

La base mise à réagir avec B" peut également être du sodium métal ou du potassium métal, préférentiellement du sodium métal.

Selon certains modes de réalisation, la proportion molaire de la base mise à réagir avec B" par rapport à B" est inférieure ou égale à 1:1.

Selon certains modes de réalisation, le composé C a une polarité mesurée à 20°C supérieure ou égale à 3 Debyes, préférentiellement supérieure ou égale à 3,5 Debyes.

Selon certains modes de réalisation, le composé C est choisi parmi la liste constituée des : C1-C6-alkyl-2-pyrrolidones, notamment la N-méthyl-2-pyrrolidone ou la N-butyl-2-pyrrolidone,
sulfoxydes, notamment le diméthylsulfoxyde ou le diéthylsulfoxyde,
sulfones, notamment la diméthylsulfone, la diéthylsulfone, la diisopropylsulfone, la diphénylsulfone ou encore la sulfone de tétraméthylène,
nitriles, notamment l'acétonitrile, le propionitrile ou le benzonitrile, N-diméthylamides, notamment le diméthylacétamide ou le diméthylformamide, et leur mélange.

Selon des modes de réalisation particuliers, le composé C peut être la diphénylsulfone.

Selon certains modes de réalisation, la proportion molaire de composé C par rapport au composé A est inférieure ou égale à 7,5 :1, préférentiellement inférieure ou égale à 5 :1, encore préférentiellement inférieure ou égale à 3 :1. Selon des modes de réalisation, le composé A est mis à réagir avec le composé B, en l'absence de tout solvant.

Selon des modes de réalisation, le composé A est mis à réagir à l'état fondu avec le composé B.

Le procédé selon l'invention concerne également un procédé de fabrication d'un polymère de poly-aryl-éther-cétone comprenant : la fabrication d'un diéther aromatique tel que ci-dessus décrit et la réaction dudit diéther aromatique avec un composé D comprenant au moins deux groupements chlorure d'acyle. Selon certains modes de réalisation, le composé D est un composé ayant pour formule chimique :
[Chem 3]

ClC(O)-Ar-[Zⱼ-Arⱼ]ₘ-C(O)Cl (IV),

dans laquelle : j est un entier allant de 1 à 3 et m est un entier égal à 0 ou 1 ; Ar et pour tout j, Arⱼ désignent indépendamment un groupe aromatique divalent, substitué ou non, préférentiellement désigne un groupe aromatique divalent choisi parmi la liste constituée de : 1,3-phénylène, 1,4-phénylène, 1,1'-biphényle divalent en positions 4,4', 1,1'-biphényle divalent en positions 3,4', 1,4-naphthylène, 1,5-naphthylène et 2,6-naphthylène ; et,
pour tout j, Zⱼ désigne indépendamment un atome d'oxygène, un atome de soufre, un groupe alkylène, tel que -CH₂- ou isopropylène (-C(CH₃)₂-), ou un sulfone, préférentiellement Zⱼ désigne un atome d'oxygène.

Selon certains modes de réalisation, ledit diéther aromatique est choisi parmi la liste constituée de : 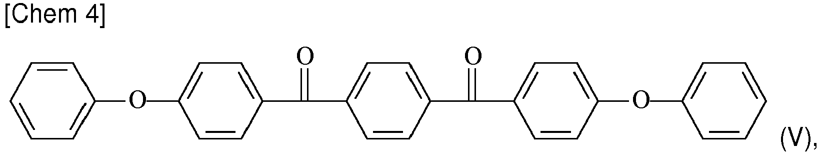 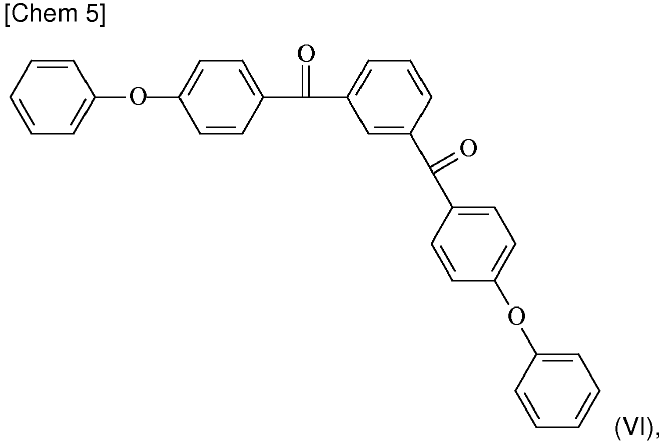 ou leur mélange ; et, le composé D est choisi parmi la liste de composés constituée de : 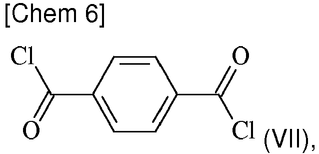 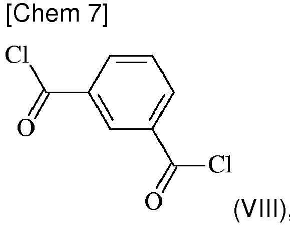 ou leur mélange.

### Description détaillée de l'invention

Le composé A comprend au moins deux groupements aromatiques halogénés. Un groupement aromatique est un groupement comprenant un cycle conjugué avec une stabilité (due à la délocalisation) significativement supérieure à celle d'une structure localisée hypothétique. Les groupements aromatiques du composé A sont avantageusement des hydrocarbures aromatiques.

Chaque groupement aromatique halogéné possède au moins un atome d'halogène substituant un atome d'hydrogène. Avantageusement, chaque groupement aromatique halogéné possède un seul atome d'halogène substituant un atome d'hydrogène.

Les groupements aromatiques peuvent également indépendamment comprendre d'autre(s) substituant(s) d'un/des atome(s) d'hydrogène restant(s), cet/ces autre(s) substituant(s) étant choisi(s) parmi : alkyle, alcényle, alcynyle, aryle, éther, thioéther, acide carboxylique, ester, amide, imide, sulfonate de métal alcalin ou alcalino-terreux, alkylsulfonate, phosphonate de métal alcalin ou alcalino-terreux, amine et ammonium quaternaire.

Selon certains modes de réalisation, les groupements aromatiques peuvent également indépendamment comprendre un seul autre substituant d'un atome d'hydrogène, ce substituant étant préférentiellement : un aryle ou un sulfonate de métal alcalin.

Selon certains modes de réalisation, le composé A peut posséder deux groupements aromatiques halogénés uniquement.

Selon certains modes de réalisation, le composé A peut être un composé ayant pour formule chimique :
[Chem 8]

X₁-Ar-[Zᵢ₋Arᵢ]ₙ-X₂ (II).

Dans cette formule :
- i est un entier allant de de 1 à 3 et n est un entier égal à 0 ou 1 ;
- X₁ et X₂ désignent indépendamment un atome d'halogène,
- Ar et pour tout i, An, désignent indépendamment un groupe aromatique divalent, substitué ou non ; et,
- pour tout i, Zᵢ désigne indépendamment un atome d'oxygène, un atome de soufre, un groupe alkylène, tel que -CH₂- ou isopropylène (-C(CH₃)₂-), un groupe carbonyle ou un groupe sulfonyle.

Préférentiellement, dans le composé de formule (II) :
- X₁ et X₂ peuvent désigner un même atome d'halogène ; X₁ et X₂ peuvent notamment désigner tous les deux un chlore ou un fluor ;
- Ar et pour tout i, An, peuvent désigner indépendamment un groupe aromatique divalent choisi parmi la liste constituée de : 1,3-phénylène, 1,4-phénylène, 1,1'-biphényle divalent en positions 4,4', 1,1'-biphényle divalent en positions 3,4', 1,4-naphthylène, 1,5-naphthylène et 2,6-naphthylène ; Ar et pour tout i, Arᵢ peuvent notamment désigner indépendamment le 1,3-phénylène et le 1,4-phénylène ;

- Pour tout i, Zᵢ peut désigner indépendamment un atome d'oxygène ou un groupe carbonyle ; pour tout i, Zᵢ peut notamment désigner un groupe carbonyle. Selon des modes de réalisation particuliers, le composé A peut être le composé A₁, A₂, A₃ ou A₄ tels que définis dans les exemples, ou encore un mélange de ces composés.

Le composé B est un alcoolate aromatique. Le composé B comporte un groupement aromatique qui est avantageusement un hydrocarbure.

Le cycle aromatique comprend au moins une fonction alcoolate substituant un atome d'hydrogène. Le cycle aromatique peut notamment posséder une seule fonction alcoolate. Alternativement, le cycle aromatique peut posséder deux fonctions alcoolates.

Le cycle aromatique de B peut également comprendre d'autre(s) substituant(s) d'un/des atome(s) d'hydrogène restant(s), cet/ces autre(s) substituant(s) étant choisi(s) parmi : alkyle, alcényle, alcynyle, aryle, éther, thioéther, acide carboxylique, ester, amide, imide, sulfonate de métal alcalin ou alcalino-terreux, alkylsulfonate, phosphonate de métal alcalin ou alcalino-terreux, amine et ammonium quaternaire. En particulier, le cycle aromatique de B peut comprendre un seul autre substituant d'un atome d'hydrogène, ce substituant étant préférentiellement : un aryle ou un sulfonate de métal alcalin.

Selon certains modes de réalisation, le composé B est un composé ayant pour formule chimique :

Ar'-O⁻ (III).

Dans cette formule, Ar' désigne un groupe aromatique monovalent, substitué ou non. Préférentiellement, Ar' désigne un groupe aromatique monovalent choisi parmi la liste constituée de : phényle, biphényle monovalent et naphthyle. Selon des modes de réalisation particuliers, le composé B est le phénolate.

La proportion molaire du composé B par rapport au composé A est d'au moins 2 :1. En effet, la réaction de B avec A engendre, de manière souhaitée, une double réaction de substitution de deux molécules de B avec une molécule de A, pour former un diéther aromatique.

Selon certains modes de réalisation, la proportion molaire de composé B par rapport au composé A est inférieure ou égale à 3 :1, préférentiellement inférieure ou égale à 2,5 :1, encore préférentiellement inférieure ou égale à 2,3 :1, et de manière extrêmement préférée d'environ 2 :1.

Le milieu réactionnel est appelé « mélange réactionnel », une fois que les deux réactifs, c'est-à-dire le composé A et le composé B, ont été mis en contact.

La « durée de réaction » correspond à la durée pendant laquelle les réactifs sont mis à réagir l'un avec l'autre.

Une fois la réaction terminée à la conversion souhaitée, préférentiellement jusqu'à une conversion totale du composé A en produits, le mélange réactionnel devient désigné comme « mélange de produits ».

La « température de réaction » correspond à la température du mélange réactionnel pendant la durée de réaction.

La « pression de réaction » correspond à la pression exercée sur le mélange réactionnel pendant la durée de réaction.

La réaction peut être mise en oeuvre dans un réacteur. Le réacteur peut par exemple être un réacteur en verre, un réacteur dont la paroi interne est en verre ou encore un réacteur en matériaux métallique inoxydable, ou revêtu de PTFE. Préférentiellement, la réaction peut être mise en oeuvre dans un mélange réactionnel ne comprenant essentiellement pas d'eau.

Préférentiellement, la réaction peut être mise en oeuvre dans une atmosphère ne comprenant essentiellement pas d'eau ni de dioxygène, par exemple sous atmosphère d'azote ou d'argon.

Préférentiellement, le mélange réactionnel peut être agité pendant toute ou partie de la durée de réaction. Ainsi, le réacteur est de préférence pourvu d'un dispositif d'agitation tel qu'un agitateur mécanique (qui peut, par exemple, comprendre une ou plusieurs pales) ou une boucle de recirculation avec une pompe.

Selon certains modes de réalisation, la réaction peut être mise en oeuvre en présence d'un composé C jouant le rôle de solvant. Des réactifs et/ou des composés intermédiaires de réaction et/ou des produits de réaction peuvent s'y dissoudre, au moins partiellement. Dans ces modes de réalisation, la quantité molaire de composé C par rapport au composé A est au plus égale à 10:1, c'est-à-dire que la réaction est mise en oeuvre en mélange réactionnel concentré. Ceci a notamment pour effet de limiter au maximum l'introduction d'impuretés dûes au solvant dans le mélange réactionnel.

Le solvant peut être choisi parmi la liste constituée de : alcools, linéaires ou ramifiés, comprenant de 3 à 10 atomes de carbone, C1-C6-alkyl-2-pyrrolidones, sulfoxydes, sulfones, nitriles, N-diméthylamides et leur mélange.

Le solvant peut notamment être un alcool, linéaire ou ramifié, comprenant de 3 à 10 atomes de carbone. L'alcool est préférentiellement non-aromatique. Comme expliqué plus loin, l'alcool solvant peut notamment être généré lors d'une étape de déprotonation de l'alcool aromatique, conjugué de l'alcoolate aromatique B, par un sel d'alcoolate. L'alcool solvant peut être choisi parmi la liste constituée de : iso-propanol, 1,2-diméthylpropanol, 1,1-diméthylpropanol, 2,2-diméthylpropanol, 1,1,2-triméthylpropanol, 1,2,2-tri-méthylpropanol, 1-éthyl-2-méthylpropanolat, 1-éthylpropanolat, n-butanol, iso-butanol, sec-butanol, tert-butanol, 2-méthylbutanol, 3-méthylbutanol, 1,2-diméthylbutanol, 1,3-diméthylbutanol, 2,3-diméthylbutanol, 1,1-diméthyl-butanol, 2,2-diméthylbutanol, 3,3-diméthylbutanol, 1-éthylbutanol, 2-éthylbutanol, 1-propylbutanol, 1,1,3,3-tétraméthylbutanol, n-pentanol, 2-pentanol, 2-méthylpentanol, n-hexanol, 2-hexanol, 3-methylpentanol, 4-methyl-pentanol, 2-éthylpentanol, 2-éthylhexanol, 2-propylheptanol, n-heptanol, 2-heptanol, 3-heptanol, n-octanol, et leur mélange.

Préférentiellement, l'alcool solvant peut être choisi parmi la liste constituée de : iso-propanol, n-butanol, de tert-butanol, de n-heptanol, de n-octanol, et leur mélange.

Le solvant peut également être une C1-C6-alkyl-2-pyrrolidone, le groupement alkyl comprenant de 1 à 6 carbones. Avantageusement, la C1-C6-alkyl-2-pyrrolidone peut être la N-méthyl-2-pyrrolidone ou la N-butyl-2-pyrrolidone.

Le solvant peut également être une sulfone. Avantageusement, la sulfone peut être la diméthylsulfone, la diéthylsulfone, la diisopropylsulfone, la diphénylsulfone ou encore la sulfone de tétraméthylène. Selon des modes de réalisation particulièrement avantageux, le solvant peut être la diphénylsulfone.

Le solvant peut également être un nitrile. Avantageusement, le nitrile peut être l'acétonitrile, le propionitrile ou le benzonitrile.

Le solvant peut également être un N-diméthylamides. Avantageusement, le N-diméthylamide est le diméthylacétamide ou le diméthylformamide.

Selon certains modes de réalisation, le solvant a une polarité mesurée à 20°C supérieure ou égale à 3 Debyes, préférentiellement supérieure ou égale à 3,5 Debyes. Ce niveau de polarité permet de mieux solubiliser les réactifs et les intermédiaires de réaction, ce qui facilite la réaction de substitution nucléophile. La proportion molaire du composé C par rapport au composé A est inférieure ou égale à 10 : 1. Ainsi, le procédé permet d'obtenir des diéthers aromatiques dans un mélange réactionnel très concentré, voire en masse, donc permet d'optimiser la production volumique. En outre, le diéther aromatique peut être obtenu avec un rendement, au moins équivalent, et dans de nombreux cas meilleur, que celui de procédés selon l'art antérieur et avec une bonne pureté.

La proportion molaire de composé C par rapport au composé A peut être préférentiellement inférieure ou égale à 7,5 :1, de manière davantage préférée, inférieure ou égale à 5 :1 et de manière extrêmement préférée, inférieure ou égale à 3 :1.

Dans certains modes de réalisation, le composé C peut être un solvant de « qualité ACS », c'est-à-dire ayant les limites de puretés définies par les limites de pureté *l'American Chemical Society* (A.C.S). Le composé C peut avoir une pureté supérieure ou égale à 95%, ou supérieure ou égale à 96%, ou supérieure ou égale à 97%, ou supérieure ou égale à 98%, ou supérieure ou égale à 99%. Le composé C peut notamment ne pas être un solvant de grande pureté de type les grades utilisés en chimie analytique.

Dans certains modes de réalisations, certains paramètres de pureté pour le composé C peuvent néanmoins être contrôlées. Le composé C ne doit notamment pas dépasser certaines quantités, typiquement moins de 100 ppm, préférentiellement moins de 50 ppm, en ions halogénures (Cl-, F-), en ions alcalins (Na⁺, K⁺), en ions métalliques (Fe(II), Fe(lll)) et en eau.

Selon d'autres modes de réalisation, la réaction peut être mise en oeuvre en l'absence de tout solvant. La réaction du mélange réactionnel est alors qualifiée de réaction « en masse ». Ce mode de réalisation présente comme avantage supplémentaire de s'affranchir de toute étape de recyclage du solvant de réaction, étape *a priori* nécessaire si le procédé est porté à une échelle industrielle. Il présente également comme avantage de limiter l'augmentation de pression à l'intérieur du réacteur.

Selon certains modes de réalisation, la température de réaction est telle que le composé A et le composé B se trouvent à l'état fondu et/ou solubilisés dans le mélange réactionnel pendant tout ou partie de la durée de réaction. Avantageusement, le composé A se trouve à l'état fondu (au-dessus du point de fusion) et le composé B est solubilisé dans le composé A fondu et/ou, le cas échéant, dans le composé C jouant le rôle de solvant, pendant au moins 50%, ou au moins 60%, ou au moins 70%, ou au moins 80%, ou au moins 90% de la durée de réaction.

Selon certains modes de réalisation, la température de réaction est telle que le diéther aromatique, produit souhaité de la réaction du composé A avec le composé B, est à l'état fondu et/ou solubilisé dans le composé A fondu pendant tout ou partie de la durée de réaction. Notamment, le diéther aromatique peut se trouver à l'état fondu et/ou solubilisé dans le composé A fondu pendant au moins 10%, ou au moins 20%, ou au moins 30%, ou au moins 40%, ou au moins 50%, ou au moins 60%, ou au moins 70%, ou au moins 80%, ou au moins 90% ou au moins 95% de la durée de réaction.

Selon certains modes de réalisation particuliers, notamment dans les modes où le composé A peut être le composé A₁, A₂, As ou A₄, tels que définis dans les exemples, le mélange réactionnel est porté à une température d'au moins 165°C, préférentiellement d'au moins 170°C ou d'aumoins 180°C ou d'au moins 190°C pendant au moins 50%, ou au moins 60%, ou au moins 70%, ou au moins 80%, ou au moins 90% ou au moins 95% de la durée de réaction.

Selon certains modes de réalisations, la durée de réaction est comprise entre 5 minutes et 5 jours, préférentiellement entre 10 minutes et 24 heures, encore préférentiellement entre 30 minutes et 5 heures.

Selon certains modes de réalisation, le composé A est ajouté au composé B ou au mélange de B et C.

Selon certains modes de réalisation, la réaction du composé A avec le composé B est mise en oeuvre à pression atmosphérique ou proche de la pression atmosphérique.

Le composé B peut être obtenu par déprotonation de l'alcool aromatique B", acide conjugué de l'alcoolate aromatique B. B" a alors pour formule chimique : Ar'-OH (IIIa).

Selon un mode de réalisation particulier, B" est le phénol.

Le composé B" peut être déprotoné par une base adaptée pour la déprotonation d'alcools aromatiques.

La base peut être choisie dans la liste constituée de sels d'alcoolates, aromatiques ou aliphatiques, sels de carbonates, hydrures métalliques, et métaux alcalins.

La base peut notamment être choisie parmi les sels d'alcoolates, linéaires ou ramifiés, comprenant de 3 à 10 atomes de carbone. Dans ce mode de réalisation, la base en réagissant avec un proton devient un alcool qui peut, si conservé dans le mélange réactionnel, jouer le rôle de solvant. La base peut préférentiellement être choisie dans la liste constituée des sels de : iso-propanolate, 1,2-diméthylpropanolate, 1,1-diméthylpropanolate, 2,2-diméthylpropanolate, 1,1,2-triméthylpropanolate, 1,2,2-tri-méthylpropanolate, 1-éthyl-2-methylpropanolate, 1-éthylpropanolate, n-butanolate, iso-butanolate, sec-butanolate, tert-butanolate, 2-méthylbutanolate, 3-méthylbutanolate, 1,2-diméthylbutanolate, 1,3-diméthylbutanolate, 2,3-diméthylbutanolate, 1,1-diméthyl-butanolate, 2,2-diméthylbutanolate, 3,3-diméthylbutanolate, 1-éthylbutanolate, 2-éthylbutanolate, 1-propylbutanolate, 1,1,3,3-tétraméthylbutanolate, n-pentanolate, 2-pentanolate, 2-méthylpentanolate, n-hexanolate, 2-hexanolate, 3-méthylpentanolate, 4-méthyl-pentanolate, 2-éthylpentanolate, 2-éthylhexanolate, 2-propylheptanolate, n-heptanolate, 2-heptanolate, 3-heptanolate, n-octanolate, et leur mélange ;
encore préférentiellement ladite base est choisie parmi la liste des sels d'iso-propanolate, de n-butanolate, de tert-butanolate, de n-heptanolate, de n-octanol, et leur mélange.

La base peut également être un sel de carbonate. Le sel de carbonate peut notamment se présenter sous la forme de poudre, la poudre ayant une distribution de taille de particules telle que D90 ait une valeur allant de 45 micromètres à 250 micromètres et D99.5 ait une valeur inférieure ou égale à 710 micromètres, la distribution de taille des particules étant mesurée par diffraction laser, selon la norme ISO 13320 : 2009.

Dans les modes de réalisation, où la base est un sel, le sel peut notamment être un sel de métal alcalin. Préférentiellement le sel peut être un sel de sodium, un sel de potassium ou un mélange de sels de sodium et de potassium.

La base peut également être du sodium métal, du lithium métal ou du potassium métal, préférentiellement du sodium métal.

La base peut également être un hydrure de sodium, un hydrure de lithium ou un hydrure de potassium.

L'étape de déprotonation de B" peut être mise en oeuvre in-situ ou non par rapport à la mise en réaction du composé A avec le composé B.

Selon certains modes de réalisation, la proportion molaire de ladite base par rapport à B" est inférieure ou égale à 1:1. Ceci permet d'assurer avantageusement une réaction quantitative de ladite base.

Selon une première variante, le procédé comprend successivement : une première étape de déprotonation de B" par une base pour former le composé B, et une deuxième étape de mise en réaction du composé B avec le composé A, éventuellement en présence d'un composé C jouant le rôle de solvant de réaction.

Entre la première et la deuxième étape, une étape d'élimination de B" en excès, et/ou d'éventuel(s) solvant(s) utilisés ou générés pendant la première étape, et/ou d'eau, peut avantageusement, le cas échéant, être mise en oeuvre.

Selon une deuxième variante, la base, le composé B", le composé A, et le cas échéant le composé C, peuvent être mélangés les uns aux autres dans n'importe quel ordre pour former le mélange réactionnel.

Une fois la réaction terminée à la conversion souhaitée, le mélange réactionnel devient désigné comme « mélange de produits ». Le mélange de produits peut être purifié et le diéther aromatique isolé comme décrit ci-après.

Le résidu des produits de réaction, obtenu par la réaction du composé A avec le composé B peut être purifié par des méthodes bien connues de l'homme du métier, incluant une ou des étapes de distillation, une ou des étapes de séparation solide/liquide, une ou des étapes de lavage, une ou des étapes d'extraction et une ou des étapes de recristallisation.

Dans les modes de réalisation où la réaction du composé A avec le composé B a été mise en oeuvre avec le composé C jouant le rôle de solvant de réaction, ce dernier peut être éliminé de sorte à obtenir un résidu sans solvant des produits de réaction.

Dans le cas où le diéther aromatique est suffisamment insoluble dans le solvant de réaction, il peut être récupéré par tout moyen de séparation solide / liquide. La séparation solide / liquide peut être réalisée en une ou plusieurs étapes successives, chaque étape étant choisie dans le groupe comprenant: filtration centrifuge, sédimentation, décantation centrifuge, filtration sous vide, filtration sous pression et filtration par gravité. La température de séparation solide/liquide doit être suffisamment basse de sorte à diminuer la solubilité du diéther aromatique dans le solvant de réaction.

Alternativement et de manière avantageuse, le solvant de réaction peut être éliminé par distillation ou aussi par déplacement avec un autre solvant ayant un point d'ébullition plus faible.

Préférentiellement, le résidu sans solvant des produits de réaction, que A ait été mis à réagir avec B en présence ou en absence de composé C, peut être purifié par une ou plusieurs étapes de lavage ou être purifié par sublimation ou cristallisation.

Des méthodes de purification pour les résidus de produits de réaction comprenant du 1,4 bis(4-phenoxybenzoyl)benzène et/ou du 1,3 bis(4-phenoxybenzoyl)benzène sont explicitées ci-dessous. L'homme du métier saurait cependant adapter ces méthodes, notamment choisir les solvants à utiliser, pour d'autres diéther aromatiques fabriqués selon l'invention.

Une étape de lavage du résidu comprenant du 1,4 bis(4-phenoxybenzoyl)benzène et du résidu comprenant du 1,3 bis(4-phenoxybenzoyl)benzène peut comprendre l'ajout d'un solvant de lavage (et choix d'une température correspondante) dans lequel le 1,4 bis(4-phenoxybenzoyl)benzène et/ou le 1,3 bis(4-phenoxybenzoyl)benzène sont peu solubles, mais dans lequel des impuretés, tels des sels et/ou des réactifs n'ayant pas réagi (notamment le phénolate), sont solubles. Le résidu est avantageusement mis en contact avec un solvant de lavage protique, tels de l'eau ou bien un mélange eau/méthanol (95/5) à température ambiante (25°C) pendant un temps de contact suffisant.

Dans certains modes de réalisation, le résidu peut être broyé en fines particules, si nécessaire de sorte à améliorer la surface de contact solvant de lavage/résidu.

Dans certains modes de réalisation, une suspension de résidu dans le solvant de lavage est mise en oeuvre sous agitation, de telle sorte à pouvoir maintenir le résidu en contact avec le solvant de lavage pendant une durée suffisante.

Le mélange résidu / solvant de lavage est ensuite séparé par un moyen de séparation solide/liquide, par exemple par filtration ou bien par centrifugation. La phase solide peut avantageusement être séchée de sorte à éliminer toute trace de solvant.

Le 1,3 bis(4-phenoxybenzoyl)benzène et/ou le 1,4 bis(4-phenoxybenzoyl)benzène peut avantageusement être solubilisé dans un solvant d'extraction, tels le chloroforme ou l'acétone, à température ambiante. Après une séparation solide/liquide, une phase liquide contenant essentiellement le 1,3 bis(4-phenoxybenzoyl)benzène et/ou le 1,4 bis(4-phenoxybenzoyl)benzène peut être récupérée, le produit purifié pouvant finalement être obtenu par élimination du solvant d'extraction (distillation). Le 1,4 bis(4-phenoxybenzoyl)benzène peut avantageusement être extrait par le chloroforme. Le 1,3 bis(4-phenoxybenzoyl)benzène peut avantageusement être extrait par l'acétone.

Dans certains modes de réalisation, le résidu peut être purifié par une étape finale de recristallisation. Dans ces modes de réalisation, le résidu ne subit préférentiellement qu'une seule et unique étape de recristallisation. Ceci est généralement rendu possible du fait du relativement faible taux d'impuretés à éliminer, en partie dû au fait que le mélange réactionnel a été mis en oeuvre en milieu très concentré, voire en masse.

Le 1,4 bis(4-phenoxybenzoyl)benzène peut en outre être avantageusement recristallisé dans le toluène.

Le 1,3 bis(4-phenoxybenzoyl)benzène peut en outre être avantageusement recristallisé dans le méthanol.

La pureté du diéther aromatique peut être déterminée par un certain nombre de méthodes usuelles de caractérisation, notamment par résonance magnétique nucléaire (RMN), calorimétrie différentielle à balayage (DSC), chromatographie en phase liquide à haute performance (HPLC) et/ou Chromatographie en phase Liquide à Ultra haute Performance (UPLC).

De préférence, le diéther aromatique est obtenu avec une pureté supérieure ou égale à 95%, de préférence supérieure ou égale à 99% et de préférence encore supérieure ou égale à 99,9%, évaluée en RMN (%molaire).

Alternativement, le diéther aromatique est obtenu avec une pureté supérieure ou égale à 95%, de préférence supérieure ou égale à 99% et de préférence encore supérieure ou égale à 99,9%, évaluée en HPLC (%massique).

Le diéther aromatique obtenu selon les modes de réalisation de l'invention peut ensuite être utilisé pour effectuer une réaction de polymérisation électrophile de manière à fabriquer un polymère de polyaryléthercétone (PAEK), le diéther aromatique étant mis à réagir avec un composé D comprenant au moins deux groupements chlorure d'acyle.

Le composé D peut être un composé ayant pour formule chimique :
[Chem 9]

ClC(O)-Ar-[Zⱼ-Arⱼ]ₘ-C(O)Cl (IV),

dans laquelle : j est un entier allant de 1 à 3 et m est un entier égal à 0 ou 1 ; Ar et pour tout j, Arⱼ désignent indépendamment un groupe aromatique divalent, substitué ou non ; et,
pour tout j, Zⱼ désigne indépendamment un atome d'oxygène, un atome de soufre, un groupe alkylène, tel que -CH₂- ou isopropylène (-C(CH₃)₂-), ou un sulfone.

Préférentiellement, Ar et pour tout j, Arⱼ désignent un groupe aromatique divalent choisi parmi la liste constituée de :
1,3-phénylène, 1,4-phénylène, 1,1'-biphényle divalent en positions 4,4', 1,1'-biphényle divalent en positions 3,4', 1,4-naphthylène, 1,5-naphthylène et 2,6-naphthylène.

Préférentiellement, pour tout j, Zⱼ désigne un atome d'oxygène.

Selon certains modes de réalisation, le composé D peut être choisi parmi la liste constituée de : le dichlorure de phtaloyle, le dichlorure d'isophtaloyle, le dichlorure de téréphtaloyle ou leur mélange. Préférentiellement, le composé D peut être choisi parmi la liste constituée de : le dichlorure d'isophtaloyle, le dichlorure de téréphtaloyle ou leur mélange.

Selon certains modes de réalisation particuliers, le diéther aromatique synthétisé selon l'invention peut être choisi parmi la liste constituée de : le 1,4 bis(4-phenoxybenzoyl)benzène, le 1,3 bis(4-phenoxybenzoyl)benzène, ou leur mélange.

Ainsi, dans le mode de réalisation dans lequel le PAEK est un poly-éther-cétone-cétone, le chlorure d'acyle aromatique difonctionnel peut être un dichlorure de phtaloyle, un dichlorure de téréphtaloyle, un dichlorure d'isophtaloyle ou leur mélange et le diéther aromatique : le 1,4 bis(4-phenoxybenzoyl)benzène, le 1,3 bis(4-phenoxybenzoyl)benzène, ou leur mélange.

La réaction de polymériation est de préférence mise en oeuvre dans un solvant. Le solvant est de préférence un solvant non protique, qui peut notamment être choisi parmi la liste constituée de : le chlorure de méthylène, le disulfure de carbone, l'ortho-dichlorobenzène, le méta-dichlorobenzène, le paradichlorobenzène, le 1,2,4-trichlorobenzène, le 1,2,3-trichlorobenzène, l'orthodifluorobenzène, le 1,2-dichloroéthane, le 1,1-dichloroéthane, le 1,1,2,2-tétrachloroéthane, le tétrachloroéthylène, le dichlorométhane, le nitrobenzène, ou leur mélange. L'ortho-dichlorobenzène est particulièrement préféré pour la fabrication de poly-éther-cétone-cétone.

La réaction de polymérisation est de préférence mise en oeuvre en présence d'un acide de Lewis comme catalyseur.

L'acide de Lexis peut notamment être choisi parmi la liste constituée de : le trichlorure d'aluminium, le tribromure d'aluminium, le pentachlorure d'antimoine, le pentafluorure d'antimoine, le trichlorure d'indium, le trichlorure de gallium, le trichlorure de bore, le trifluorure de bore, le chlorure de zinc, le chlorure ferrique, le chlorure stannique, le tétrachlorure de titane et le pentachlorure de molybdène. Le trichlorure d'aluminium, le trichlorure de bore, le tribromure d'aluminium, le tétrachlorure de titane, le pentachlorure d'antimoine, le chlorure ferrique, le trichlorure de gallium et le pentachlorure de molybdène sont préférés. Le trichlorure d'aluminium est particulièrement préféré pour la fabrication de poly-éther-cétone-cétone.

Selon certaines variantes, la polymérisation peut être mise en oeuvre dans le même réacteur que celui utilisé pour la production du diéther aromatique. Mais préférentiellement, la polymérisation est mise en oeuvre dans un autre réacteur. La polymérisation peut être mise en oeuvre à une température allant, par exemple, de 20 à 120 ° C.

Le procédé de fabrication de PAEK, et notamment de poly-éther-cétone-cétone, comprend avantageusement une ou plusieurs étapes de purification du polymère, telles que les étapes de :
- mélange des produits de la réaction de polymérisation contenant du PAEK avec un solvant protique de manière à fournir une suspension de PAEK;
- séparation du polymère de PAEK de la suspension de PAEK, de préférence par filtration et lavage.

Le solvant protique utilisé pour la suspension de PAEK peut être, par exemple, le méthanol.

Le polymère de PAEK peut ensuite être récupéré de la suspension de PAEK par filtration. Si nécessaire, le polymère peut être lavé, de préférence par un solvant protique tel que le méthanol, et filtré à nouveau, une ou plusieurs fois. Le lavage peut être effectué par exemple en remettant en suspension le polymère dans le solvant.

### Exemples

Les exemples suivants illustrent l'invention sans toutefois la limiter.

### Apareillages utilisés pour les caractérisations

Pour des mesures de Chromatographie en phase Liquide Haute Performance (HPLC), une colonne Waters XterraMS C18 3.5µm 4.6x150mm a été utilisée avec une phase mobile comprenant un mélange : eau/ acétonitrile + 0,05% acide trifluoroacétique, en gradient. Les mesures ont été faites à 20°C, à des longueurs d'ondes variables.

Pour des mesures de Sprectroscopie de Masse (SM), un appareillage Xevo G2-XS QTof WATERS a été utilisé avec les paramètres suivants :
Introduction de l'échantillon par la sonde ASAP (Atmospheric pressure Solids Analysis Probe)
Mode d'ionisation : ASAP positif
Gamme de masse : 50-1000 m/z
Température de la source : 120 °C
Courant de corona : 10 µA
Tension du cône : 50 V

Pour des mesures de Résonnance Magnétique Nucléaire du proton (¹H RMN) des spectromètres BRUKER AVANCE III (500 MHz) et BRUKER NEO (600MHz) ont été utilisés avec CDCl3 comme solvant.

Pour des mesures de Résonnance Magnétique Nucléaire du carbone (¹³C RMN) des spectromètres BRUKER AVANCE III 500 MHz (125 MHz) and BRUKER NEO 600MHz (150 MHz) ont été utilisés avec CDCl3 comme solvant.

Pour les mesures de point du fusion un Banc Kofler et un Gallenkamp *melting point apparatus* (avec tubes capillaires) ont été utilisés.

On entend ci-après par rendement brut, le rapport en moles de produit obtenu en fin de réaction sur le nombre de mole de composé dihalogéné introduit.

On entend ci-après par rendement de produit purifié, le rapport en moles de produit purifié (produit attendu), c'est-à-dire du produit brut ayant notamment été lavé et/ou extrait et/ou recristallisé, sur le nombre de moles de composé dihalogéné introduit. Ce rendement est associé à une pureté évaluée en RMN (%molaire) ou par HPLC (%massique).

### Exemple 1 : 1,4-bis(4-fluorobenzoyl)benzène

Le composé A₁ de formule : 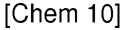 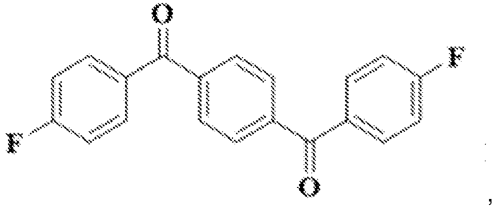 a été synthétisé dans les conditions suivantes : 1 équivalent (éq.) de chlorure de téréphthaloyle (5 g ; 24.6 mmol), 10 équivalents de fluorobenzène (28 g ), 2.1 équivalents d'AlCl₃ (6.9 g ; 51.7 mmol). Le fluorobenzène utilisé dans cette réaction à servi à la fois de réactif et de solvant. Le chlorure d'aluminium a été ajouté à 25°C en petites portions (pendant 10 min)sur le chlorure de téréphthaloyle solubilisé dans le fluorobenzène, sous agitation et sous atmosphère d'argon. A la fin de l'ajout d'AlCl₃, le mélange réactionnel a été maintenu sous agitation pendant 2h à 60°C. Ensuite, après refroidissement, le mélange de produits obtenu a été versé sur de l'eau glacé suivi par une évaporation de l'excès de fluorobenzène sous vide à l'évaporateur rotatif. Le solide blanc obtenu a été filtré, lavé plusieurs fois à l'eau distillée, à la soude aqueuse à 10%, ensuite à l'eau et enfin séché sous vide. Le produit attendu A₁ a été obtenu avec un rendement de l'ordre de 99.1%. La cristallisation du produit brut dans le diméthylacétamide a conduit au produit purifié avec un rendement de l'ordre de 96% et une pureté > 99.5% (RMN et SM).

Le produit obtenu sous forme de cristaux blancs est soluble dans le chloroforme, l'acétone, le dichlorométhane et partiellement dans le méthanol. Son point de fusion a été mesuré égal à 220°C.

### Exemple 2 : 1,3-bis(4-fluorobenzoyl)benzène

Le composé A₂ de formule : 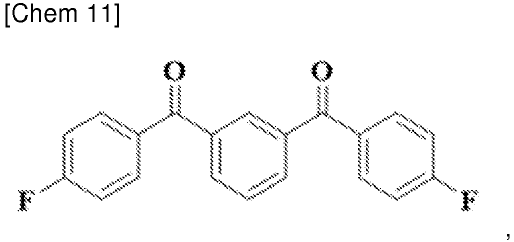 a été synthétisé sensiblement de la même manière que le composé A₁ de l'exemple 1, sauf que du dichlorure d'isophtaloyle a été utilisé à la place du dichlorure de téréphtaloyle.

Après traitement similaire de celui appliqué pour le composé A₁, le composé A₂ a été obtenu avec un rendement quasi quantitatif sous forme des cristaux blancs, ayant un point de fusion mesuré à 181 °C.

Le produit est soluble dans les solvants courants. Il a été cristallisé dans le toluène. Le rendement obtenu a été de l'ordre de 95%. La pureté selon la RMN, SM et HPLC a été de l'ordre de 99.8%.

### Exemple 3 : 1,4-bis(4-chlorobenzoyl)benzène

Le composé A₃ de formule : 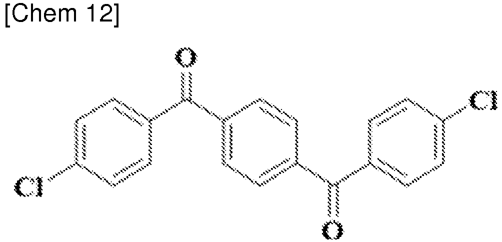 a été sensiblement synthétisé de la même manière que le composé A₁ de l'exemple 1, sauf que du chlorobenzène a été utilisé à la place du fluorobenzène.

Néanmoins, certaines conditions réactionnelles ont été modifiées, permettant d'obtenir un meilleur rendement en produit attendu. Les conditions réactionnelles ont été les suivantes : 1 équivalent de chlorure de téréphthaloyle (5 g ; 24.6 mmol), 16 éq. de chlorobenzène (44.35 g (40 ml), 0.394 mol) et 2.4 éq. d'AlCl₃ (7.88g, 59.1 mmol). Le chlorure d'aluminium a été ajouté sur le chlorure de téréphthaloyle solubilisé dans le chlorobenzène par petites portions (pendant 10 minutes) sous agitation sous atmosphère d'argon à TA. Le chlorobenzène utilisé dans cette réaction sert à la fois comme réactif et comme solvant. A la fin d'ajout de l'AlCl₃, le mélange réactionnel a été agité pendant une nuit à 25°C et ensuite 3h à 90 °C. Après un traitement identique à celui effectué pour le composé A₁, le produit attendu A₃ a été obtenu avec un rendement quasi quantitatif sous forme d'une poudre blanche. La cristallisation du produit brut dans le diméthylacetamide (DMAc) a conduit au produit pur sous forme de cristaux blancs, ayant un point d fusion égal à 259°C. Le rendement en produit cristallisé a été de l'ordre de 96%. Une étude RMN à haute température a montré une sélectivité strictement supérieure à 99.6%.

### Exemple 4 : 1,3-bis(4-chlorobenzoyl)benzène

Le composé A₄ de formule : 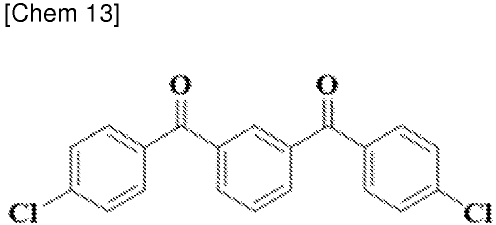 , a été sensiblement synthétisé de la même manière que le composé A₁ de l'exemple 1, sauf que du chlorobenzène a été utilisé à la place du fluorobenzène et que du dichlorure d'isophtaloyle a été utilisé à la place du dichlorure de téréphtaloyle. Néanmoins certaines conditions réactionnelles ont été modifiées comme détaillé ci-dessous.

Après fin d'ajout du chlorure d'aluminium en petites portions sur le chlorure d'isotéréphthaloyle solubilisé dans le chlorobenzène à température ambiante, le milieu réactionnel a été agité pendant 10h à cette température et ensuite 2h à 90 °C. Après refroidissement et évaporation de l'excès de chlorobenzène, le résidu solide obtenu a été extrait à l'aide de dichlorométhane (DCM). La phase organique a été lavée deux fois à l'eau et trois fois à la soude aqueuse à 10%, et finalement deux fois à l'eau. Elle a ensuite été séchée et évaporée sous vide. Le produit attendu a été obtenu sous forme de cristaux blancs pur en RMN et SM (pureté strictement supérieure à 99.6%) avec un point de fusion mesuré à 215°C. Le rendement a été de l'ordre de 96%.

### Exemple 5 : Mélange M₁/M₁'à partir de A₁ en mélange réactionnel dilué (comparatif)

Un mélange de phénol (0.718g ; 2 éq) et de carbonate de potassium (1.055g ; 2eq) a été solubilisé dans un mélange de solvants : toluène (10 mL) /NBP (10mL), et porté au reflux pendant 1h (température de bain 130°C). Après l'ajout de composé A₁, suivie par la distillation du toluène, le mélange réactionnel a été chauffé à 150 °C-160°C pendant 2h. Après traitement du résidu obtenu par un mélange eau/méthanol (95/5), filtration, lavage avec un mélange eau/méthanol (95/5) et séchage, le produit brut a été obtenu sous forme d'une poudre blanche avec un rendement de 81%.

La structure du produit attendu, le diéther aromatique M₁ de formule : 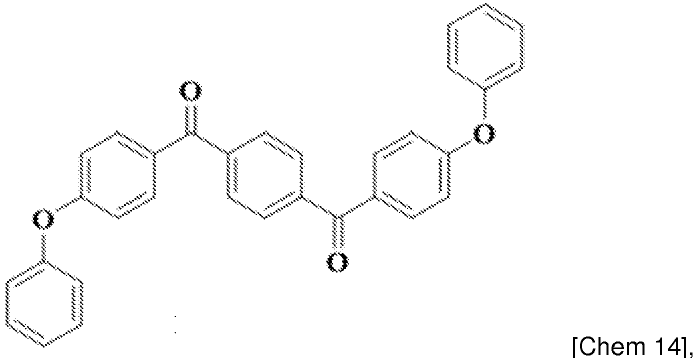 a été confirmée par les analyses RMN et de spectroscopie de masse (SM).

En spectroscopie de masse, il a été détecté la présence du dérivé monophénoxylé M'₁ (ratio de surfaces d'environ 15%) de formule :

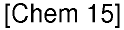

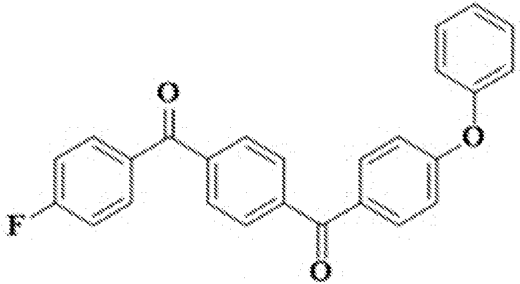

Le rendement en produit cristallisé dans le toluène a été de l'ordre de 72%, avec une pureté strictement supérieure à 99%, telle que mesurée en RMN.

Le point de fusion PF a été mesuré à 208°C.

### Exemple 6 : Mélange M₂/M₂' à partir de A₂ en mélange réactionnel dilué (comparatif)

De manière analogue à l'exemple 5, le composé M₂ de formule : 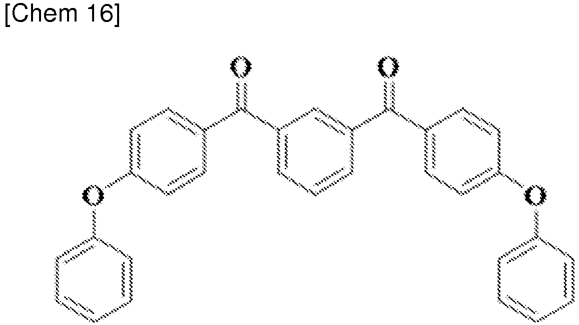 a été obtenu à partir du composé A₂, selon des conditions analogues à celles décrites pour la synthèse de M₁, le composé A₂ remplaçant le composé A₁. Une différence par rapport à l'exemple 5 est que le mélange réactionnel a ici été chauffé à 150°C-160°C pendant seulement 30 minutes, après la distillation du toluène.

Le produit a été obtenu sous forme d'un solide blanc avec un rendement brut de l'ordre de 70%.

### La structure du produit M₂ a été confirmée par les analyses RMN et de spectroscopie de masse.

En spectroscopie de masse, il a été détecté la présence de traces du produit monophénoxylé M₂' (environ 15%) de formule :

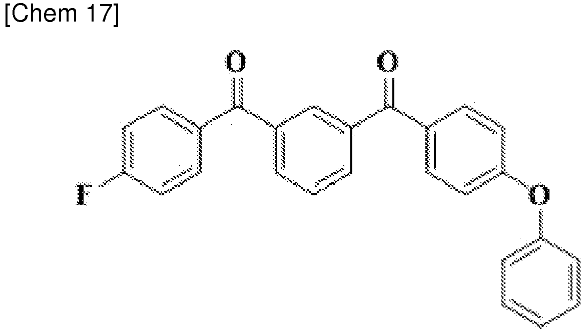

Le rendement du produit cristallisé dans le méthanol a été de l'ordre de 61%, avec une pureté strictement supérieure à 99%, telle que mesurée en RMN. Le point de fusion PF a été mesuré à 133°C.

### Exemple 7 : M₁ à partir de A₁ en solution concentrée (invention)

Dans un tube scellé, du phénol (2,5 équivalents) et du bicarbonate de potassium anhydre (2,5 équivalents), sous forme de poudre, puis 0,2 mL de N-butyl-2-pyrrolidone (NBP) ont été introduits sous argon. Le mélange réactionnel a été chauffé à 180°C sous agitation pendant 30 min. Après refroidissement partiel (environ 100°C), 1 mmol (1équivalent) de composé A₁ a été ajoutée.

Le mélange réactionnel a ensuite été chauffé à 205°C pendant 2h.

L'avancement de la réaction a été suivi en HPLC, SM et RMN. Il a ainsi été montré que la conversion en produit souhaité était quasi quantitative 2 heures après la fin de l'ajout de composé A₁. Par ailleurs, ni le produit de départ ni le dérivé monophénoxylé M₁' n'ont été détectés.

Le traitement du résidu obtenu a été effectué par l'ajout de méthanol puis évaporation sous vide de l'évaporateur rotatif jusqu'à l'élimination de NBP (azéotrope).

Le produit brut obtenu sous forme d'un solide blanc cassé a été extrait par le chloroforme. Après filtration des insolubles et évaporation de chloroforme, le produit brut a ensuite été cristallisé dans le toluène.

Le produit M₁ pur (structure confirmée par RMN et SM) a été obtenu sous forme de cristaux blancs avec un rendement de 83% et une pureté supérieure strictement à 99% mol, mesurée en RMN. Le point de fusion a été mesuré à 212°C.

### Exemple 8 : M₂ à partir de A₂ en solution concentrée (invention)

De manière analogue à l'exemple 7, le composé M₂ a été obtenu à partir du composé A₂, selon des conditions analogues à celles décrites pour la synthèse de M₁, le composé A₂ remplaçant le composé A₁. Une différence par rapport à l'exemple 7 est que le produit brut obtenu sous forme d'un solide blanc cassé a ici été extrait à l'acétone au lieu du chloroforme.

Le produit pur M₂ (structure confirmée par RMN et SM) a été obtenu sous forme de cristaux blancs avec un rendement de 84%, et une pureté est strictement supérieure à 99% en HPLC. Le point de fusion a été mesuré à 133°C.

### Exemple 11 : M₁ à partir de A₁ avec un alcoolate de potassium comme base (invention)

Du phénol (2,3 éq) puis du tert-butanolate de potassium (t-BuOK ; 2,2 éq) ont été introduits dans un tube scellé sous argon. Le milieu réactionnel a été chauffé sous agitation à 185°C pendant 30 min. Après refrodissement partiel (environ 100°C), le composé A₁ (1éq) a été ajouté.

Le mélange réactionnel a ensuite été chauffé à 215°C pendant 2 heures. L'avancement de la réaction a été suivi en HPLC, SM et RMN.

Il a ainsi été montré que le produit souhaité M₁ a été obtenu quasiment quantitativement à un temps de 2 heures après la fin de l'ajout du composé A₁.

Le traitement de résidu obtenu a été effectué par une extraction par le chloroforme. Après filtration des insolubles le produit et évaporation du chloroforme, le produit brut a ensuite été purifié par lavage au méthanol (et pourrait alternativement ou en complément être cristallisé dans le toluène).

Le produit pur M₁ (structure confirmée par RMN et SM) a été obtenu sous forme de cristaux blancs avec un rendement de l'ordre de 93% et une pureté strictement supérieure à 99.5%, mesurée en RMN. Le point de fusion a été mesuré à 212°C.

L'utilisation de t-BuOK comme base pour déprotoner le phénol engendre la production de tert-butanol (t-BuOH), qui sert de solvant et facilite une conversion totale. Le deuxième avantage de cette base est de permettre la récupération/ le recyclage de l'alcool après la fin de la réaction par simple distillation.

### Exemple 12 : M₂ à partir de A₂ avec un alcoolate de potassium comme base (invention)

De manière analogue à l'exemple 11, le composé M₂ a été obtenu à partir du composé A₂, selon des conditions analogues à celles décrites pour la synthèse de M₁, le composé A₂ remplaçant le composé A₁. A noter une différence cependant, concernant l'étape de traitement : le produit brut a été extrait à l'acétone au lieu du chloroforme.

Le produit souhaité M₂ a été obtenu quasiment quantitative à un temps de 2 heures après la fin de l'ajout du composé A₂ (suivi de l'avancement de réaction par RMN).

Le produit pur M₂ (structure confirmée par RMN et SM) a été obtenu sous forme de cristaux blancs avec un rendement de 92% et une pureté strictement supérieure à 99.5 % en HPLC. Le point de fusion a été mesuré à environ 132°C-133°C.

### Exemple 13 : Mélange M₁/M₁" à partir de A₃ en mélange réactionnel dilué (comparatif)

Pour synthétiser le composé M₁ à partir du composé A₃, il a été procédé sensiblement comme dans la réaction de l'exemple 5, A₃ remplaçant A₁. Les conditions suivantes ont été utilisées : A₃ (1,9 mmol ;1 éq.), phénol (2 éq.) et carbonate de potassium (2 éq.). Le solvant utilisé a été un mélange de toluène (5 mL) / NBP (5 mL).

Le mélange réactionnel a été chauffé (après distillation du toluène) à 200°C pendant 24 heures (au lieu de 160°C pendant 2 heures pour le dérivé fluoré). Le traitement du résidu obtenu a été effectué par l'ajout de méthanol puis évaporation sous vide de l'évaporateur rotatif jusqu'à l'élimination de NBP (azéotrope).

Le produit attendu M₁ détecté en SM (environ 70%) a été obtenu en mélange avec le produit de départ et le dérivé monophénoxylé (ratio de surfaces d'environ 15%) de formule M₁" :

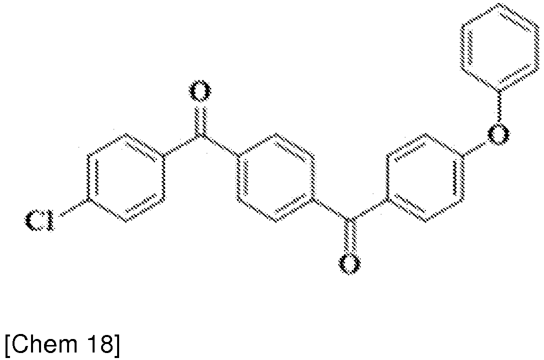

Ces résultats montrent que la conversion n'a pas été totale malgré l'augmentation de la température et la prolongation de la durée de chauffage. Le produit attendu pur M₁ a été obtenu après cristallisation du produit brut dans le toluène, avec un rendement de 57% et une pureté strictement supérieure à 99%, telle que mesurée en RMN. Le point de fusion a été mesuré à 211 °C.

### Exemple 14 : Mélange M₂/M₂" à partir de A₄ en mélange réactionnel dilué (comparatif)

De manière analogue à l'exemple 13, le composé M₂ a été obtenu à partir du composé A₄, selon des conditions analogues à celles décrites pour la synthèse de M₁, le composé A₄ remplaçant le composé A₃.

Le produit brut a été obtenu en mélange avec le dérivé monophénoxylé M₂" détecté en SM (ratio des surfaces d'environ 15%) de formule : 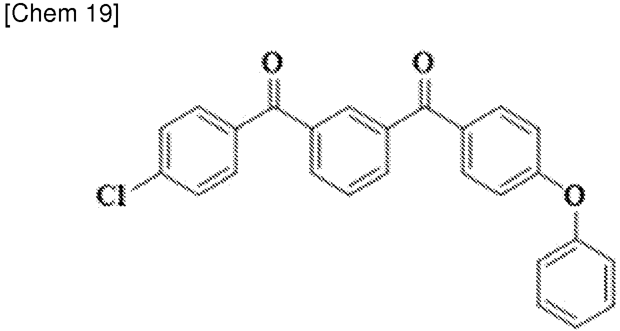 et des traces de produits de départ (confirmé en RMN et SM).

Après cristallisation du produit brut dans le méthanol, le produit pur M₂ (structure confirmée par RMN et SM) a été obtenu sous forme d'un solide blanc avec un rendement de l'ordre de 55% et une pureté strictement supérieure à 99%. Le produit recristallisé a un point de fusion mesuré de 132°C.

### Exemple 15 : M₁ à partir de A₃ en solution concentrée (invention)

Pour synthétiser le composé M₁ à partir du composé A₃, il a été procédé similairement à la réaction de l'exemple 7, A₃ remplaçant A₁. Les conditions suivantes ont été utilisées : A₃ (1 mmol ;1 éq.), phénol (2,8 éq.) et bicarbonate de potassium anhydre (2,8 éq.). Le solvant utilisé a été la NBP (0,2mL).

Le mélange réactionnel a été chauffé à 220°C pendart 3 heures. L'avancement de la réaction a été suivi en HPLC, SM et RMN. Il a ainsi été montré que la conversion en produit souhaité a été quasi quantitative à un temps de 3h après la fin de l'ajout du composé A₃. Le traitement du produit brut a été effectué de la même façon que dans l'exemple 7.

Le produit pur M₁ (structure confirmée par RMN et SM) a été obtenu sous forme de cristaux blancs avec un rendement de 82% et une pureté strictement supérieure à 99.5 %, mesurée en RMN. Le point de Fusion a été mesuré à 211°C.

### Exemple 16 : M₂ à partir de A₄ en solution concentrée (invention)

Il a été procédé exactement comme dans le cas de la synthèse de l'exemple 15, sauf que A₄ remplace A₃, que l'on a chauffé le mélange réactionnel à 210°C au lieu de 220°C, et que le produit brut a été extrait à l'acétone au lieu du chloroforme.

Le produit pur M₂ (structure confirmée par RMN et SM) a été obtenu sous forme de cristaux blancs avec un rendement de 82%, et une pureté supérieure ou égale à 99.5%, telle que mesurée en RMN. Le point de fusion a été mesuré à 133°C.

### Exemple 19 : M₁ à partir de A₃ avec un alcoolate de potassium comme base (invention)

Du phénol (2,3 éq) puis du t-BuOK (2,2 éq) ont été introduits dans un tube scellé sous argon. Le milieu réactionnel a été chauffé sous agitation à 185°C pendant 30min. Après refroidissement partiel (environ 100°C), le composé A₃ (1 éq) a été ajouté.

Le mélange réactionnel a ensuite été chauffé à 220°C pendant 3 heures. L'avancement de la réaction a été suivi en HPLC et RMN. Ainsi, il a été montré que le produit souhaité M₁ a été obtenu quasi-quantitativement à un temps de 3h après la fin de l'ajout du composé A₃.

Le résidu obtenu a été extrait au chloroforme. Après filtration des insolubles et l'évaporation du chloroforme, le produit brut (assez pur en RMN) a ensuite été cristallisé dans le toluène.

Le produit pur M₁ (structure confirmée par RMN et SM) a été obtenu sous forme de cristaux blancs avec un rendement de 90% et une pureté strictement supérieure à 99.5 %, mesurée par RMN. Le point de Fusion a été mesuré à 212°C.

### Exemple 20 : M₂ à partir de A₄ avec un alcoolate de potassium comme base (invention)

Il a été procédé exactement comme dans le cas de la synthèse de l'exemple 19, sauf que A₄ remplace A₃, que l'on a chauffé à 205°C au lieu de 220°C et que pour l'étape de traitement le produit brut a été extrait à l'acétone au lieu du chloroforme.

Le produit souhaité M₂ a été obtenu quasi quantitativement à un temps de 2 heures après la fin de l'ajout du composé A₂, ce qui a été confirmé par RMN. Le produit pur M₂ (structure confirmée par RMN et SM) a été obtenu sous forme de cristaux blancs avec un rendement de 90% et une pureté strictement supérieure à 99.5 %, mesurée en HPLC. Le point de fusion a été mesuré à 132°C.

### Exemples 21-24 : Influence du contre-ion de l'alcoolate t-BuO⁻

Des expériences similaires à celles des exemples 11, 12, 19 et 20 ont été mise en oeuvre, dans lesquelles t-BuONa a été utilisé à la place de t-BuOK. Elles ont été intitulées respectivement exemples 21, 22, 23 et 24. Les temps de réaction et température de réaction ont été adaptés de sorte à obtenir des conversions quasi-quantitatives. Les conditions utilisées et les résultats obtenus sont consignés dans le tableau 1 ci-dessous :

**Tableau 11**

| | Température (°C) | Temps de réaction (h) | Rendement produit purifié |
|---|---|---|---|
| Exemple 21 | 220 | 4 | >90 |
| Exemple 22 | 210 | 3 | >90 |
| Exemple 23 | 225 | 20 | >90 |
| Exemple 24 | 225 | 20 | >90 |

Ainsi, la comparaison des exemples 11, 12, 19 et 20 par rapport aux exemples 21, 22, 23 et 24 montre que la réaction avec t-BuOK est beaucoup plus rapide cinétiquement que la réaction avec t-BuONa, les réactions ayant lieu dans du t-BuOH/excès de phénol jouant le rôle de solvant.

### Exemple 25 : M₁ à partir de A₁ avec un alcoolate de potassium comme base et élimination des alcools avant réaction

Du phénol (2,3 éq.), du t-BuOK (2.2 éq) ont été introduits dans un tube scellé sous argon. Le milieu réactionnel a été chauffé à 185°C (Température du bain) pendant 30 min. Après refroidissement partiel (à environ 100°C), le t-BuOH formé comme sous-produit ainsi que l'excès de phénol ont été éliminés par évaporation à l'aide d'un flux d'azote ou d'argon. Le composé A₁ a ensuite été ajouté.

Après que le composé A₁ a entièrement été ajouté, le mélange réactionnel a été chauffé à 230°C (température du bain) pendant 1 h. A partir de T=210°C (température du bain), on a noté que le milieu réactionnel s'est transformé en suspension marron clair, facilement agitable.

L'avancement de la réaction a été suivi en RMN. Ainsi il a pu être montré que la conversion en produit attendu M₁ a été totale à un temps d'une heure après la fin de l'ajout de composé A₁.

Après refroidissement, le brut formé sous forme d'un solide marron clair a été gratté puis broyé. Pour éliminer les sels formés et d'éventuelles traces de phénol, le brut obtenu a été agité dans l'eau distillée (20 mL) pendant 1h, ensuite filtré puis lavé plusieurs fois à l'eau distillée et enfin au pentane. Après séchage dans une étuve à 75°C pendant 2 heures, leproduit attendu M₁ obtenu avec un rendement de 94%, sous forme d'une poudre blanc cassé, de pureté strictement supérieure à 99.5% en RMN.

### Exemple 26 : M₁ à partir de A₃ avec un alcoolate de potassium comme base et élimination des alcools avant réaction

Du phénol (2.3 éq.), du t-BuOK(2.2 éq.) ont été introduits dans un tube scellé. Le mélange réactionnel a été chauffé à 185°C (T du bain = 185°C) pendant 30min. Après refroidissement partiel (à environ 100°C), le t-BuOH formé comme sous-produit ainsi que l'excès de phénol ont été éliminés par évaporation à l'aide d'un flux d'azote ou d'argon. Le composé A₃ a ensuite été ajouté.

Après que le composé A₃ a entièrement été ajouté, le mélange réactionnel a été chauffé à 230°C pendant 4 heures. L'avancement de la réaction a été suivi par RMN. Ainsi, il a pu être montré que la conversion était totale à un temps de 4 heures après la fin de l'ajout du composé A₃.

Après refroidissement, le brut formé sous forme d'un solide marron a été agité dans l'eau distillée (30 mL) pendant 6h. La suspension obtenue a été filtrée puis lavée plusieurs fois à l'eau distillée. Après séchage dans une étuve à 85°C pendant 6h, le produit attendu M₁ a été obtenu avec un excellent rendement de l'ordre de 93% sous forme d'une poudre blanc cassé, et une pureté mesurée en RMN strictement supérieure à 99.3%.

### Exemple 27 : M₂ à partir de A₂ avec un alcoolate de potassium comme base et élimination des alcools avant réaction

Il a été procédé exactement comme dans le cas de la synthèse de l'exemple 26, sauf que A₂ remplace A₃. L'expérience a été réalisée dans les conditions : A₂ (3 mmol ; 1éq.) ; t-BuOK(0.748g ; 2.2 éq.); phénol (0.652g ;2.3 éq.). Après traitement à l'aide du procédé décrit dans l'exemple 26, le composé M₂ a été obtenu avec un rendement de l'ordre de 97%, une pureté mesurée en RMN strictement supérieure à 99.6%.

### Exemple 28 : M₁ à partir de A₁ avec un alcoolate de sodium comme base et élimination des alcools avant réaction

Les expériences ont été réalisées dans les conditions suivantes : HAr53 (3 mmol ; 0.976g ; 1éq.) ; t-BuONa (2.2 éq.); phénol (2.3 éq.).

Du phénol (2.3 éq.), du t-BuONa (2.2 éq.) sont introduits dans un réacteur muni d'un doigt de gant et un manomètre. Le milieu réactionnel a été chauffé à 185°C (température du bain) pendant 30min (température interne de140°C ; pression interne de 2.7 bars (pression relative à la pression atmosphérique). Après refroidissement partiel (à environ 100°C), le t-BuOH formé comme sous-produit ainsi que l'excès de phénol sont éliminés par évaporation à l'aide d'un flux d'azote. Ensuite, le composé A₁ est ajouté.

Après que le composé A₁ a entièrement été ajouté, le mélange réactionnel a été chauffé à 230°C (température du bain de 230°C ; température interne de 190°C ; Pression interne de 0.25 bar) pendant 2h. Il a été noté qu'à partir d'une température interne de170°C, le mélange réactionnel était dans un état d'un liquide marron clair et donc facilement agitable. L'avancement de la réaction a été suivi par RMN. Il a ainsi été prouvé que la conversion en produit attendu M₁ était totale à un temps de 2 heures après la fin de l'ajout de A₁.

Après refroidissement, le brut formé sous forme d'un solide marron a été agité dans l'eau distillée (30 mL) pendant 6h. La suspension obtenue a été filtrée puis lavée plusieurs fois à l'eau distillée. Après séchage dans une étuve à 85°C pendant 6h, le produit attendu M₁ a été obtenu avec un rendement de 96% sous forme d'une poudre blanc cassé, de pureté strictement supérieure à 99,4% mesurée en RMN.

En comparant les exemples 19 et 28, il peut être conclu que la réaction fonctionne aussi bien avec t-BuONa qu'avec t-BuOK en absence de solvant t-BuOH/excès de phénol.

### Exemple 29 : M₁ à partir de A₃ avec du sodium métal comme base

Du phénol (0.58g ; 2.2 éq.) puis du THF sec (3 mL) ont été introduits dans un réacteur muni d'un doigt de gant et d'un thermomètre. Du sodium (2.2 éq) a ensuite été ajouté en petites portions 25°C sous forte agitation. Un dégagement de dihydrogène a été observé. Le milieu réactionnel a été agité à 25°C jusqu'à la disparition totale du sodium pendant environ 1 h. Le THF a ensuite été éliminé par évaporation en chauffant le milieu réactionnel à 60°C sous flux d'azote. Après refroidissement, le composé A₃ a été ajouté.

Après que le composé A₃ a entièrement été ajouté, le mélange réactionnel a été chauffé à 230°C (température du bain) pendant 5 heures. Il est à noter qu'à partir d'une température interne (température du mélange réactionnel) mesurée de 190°C, le milieu réactionnel s'est transformé en état d'un liquide jaune foncé facilement agitable.

L'avancement de la réaction a été suivi en RMN. Ainsi, il a pu être montré que la conversion en produit attendu M₁ a été de l'ordre de 65% à un temps de 2 heures après la fin de l'ajout du composé A₃, et était quasiment totale à un temps de 5 heures après la fin de l'ajout du composé A₃.

Après refroidissement, le brut obtenu sous forme d'un solide marron a été agité dans de l'eau distillée (30 mL) pendant 3h. La suspension obtenue a été filtrée puis lavée plusieurs fois à l'eau distillée. Après séchage dans une étuve à 85°C pendant 6h, le produit attendu M₁ a été obtenu avec un rendement de 90%, sous forme d'une poudre blanc cassé, de pureté strictement supérieure à 99,3%, mesurée en RMN.

### Exemple 30-32 : M₁ à partir de A₃ avec un alcoolate de potassium comme base en solution concentrée dans le DPS.

Dans un tube scellé, ont été introduits sous argon du phénol (2,4 éq), du carbonate de potassium anhydre sous forme de poudre (2,3 éq), le monomère A₃ (1 éq, 0,2 g) puis la diphénylsulfone (DPS) sous forme de solide blanc (2,03 éq). Le mélange réactionnel a été chauffé sous agitation à 230°C pendant 5 heures. Après seulement 25 minutes, le mélange réactionnel a viré au rouge foncé sous forme d'une suspension facilement agitable. L'avancement de la réaction a été suivi par RMN.

Après refroidissement, le produit obtenu sous forme d'un solide blanc à blanc cassé a été purifié par un premier lavage à l'acétone pour retirer la DPS et l'excès de phénol, puis par un deuxième lavage par l'eau distillée pour éliminer les sels formés : notamment KCI et l'excès de phénolate de potassium. Après séchage dans une étuve à 75°C pendant 2h, le monomère M1 attendu a été obtenu sous forme d'une poudre blanche, pure en RMN (>99%), avec un rendement de 96%.

Il est à noter que la diphénylsulfone utilisée était seulement de qualité technique (Sigma Aldrich ; pureté strictement supérieure à 97%).

Il a été procédé exactement comme dans le cas de la synthèse de l'exemple 30, avec des proportions en composés de départ différentes pour les exemples 31 et 32.

Dans l'exemple 31, ont été introduits dans un tube scellé sous argon du phénol (2,4 éq), du carbonate de potassium anhydre sous forme de poudre (2,3 éq), le monomère A₃ (1 éq, 0,2 g) puis la diphénylsulfone (DPS) sous forme de solide blanc (4,07 éq).

Après les deux lavages successifs et séchage, le monomère M1 attendu a été obtenu sous forme d'une poudre blanche, pure en RMN (>99%), avec un rendement de 97%.

Dans l'exemple 32, ont été introduits dans un tube scellé sous argon du phénol (2,3 éq), du carbonate de potassium anhydre sous forme de poudre (2,2 éq), le monomère A₃ (1 éq, 0,2 g) puis la diphénylsulfone (DPS) sous forme de solide blanc (4,07 éq).

Après les deux lavages successifs et séchage, le monomère M1 attendu a été obtenu sous forme d'une poudre blanche, pure en RMN (>99%), avec un rendement de 96%.

## Revendications

1. Procédé de fabrication d'un diéther aromatique comprenant la réaction d'un composé A comprenant au moins deux groupements aromatiques halogénés avec un composé B, B étant un alcoolate aromatique,
optionnellement en présence d'un composé C jouant le rôle de solvant de réaction,
la proportion molaire de composé B par rapport au composé A étant d'au moins 2:1 et la quantité molaire de composé C par rapport au composé A étant, le cas échéant, au plus égale à 10:1.

2. Procédé de fabrication selon la revendication 1, dans lequel le composé A est un composé ayant pour formule chimique :
X₁-Ar -[Zᵢ-Arᵢ]ₙ-X₂ _{(II)},
dans laquelle :
- i est un entier allant de de 1 à 3 et n est un entier égal à 0 ou 1 ;
- X₁ et X₂ désignent indépendamment un atome d'halogène, préférentiellement désignent un même atome d'halogène, et encore préférentiellement désignent tous les deux un chlore ou un fluor ;
- Ar et pour tout i, An, désignent indépendamment un groupe aromatique divalent, substitué ou non, préférentiellement désignent indépendamment un groupe aromatique divalent choisi parmi la liste constituée de : 1,3-phénylène, 1,4-phénylène, 1,1'-biphényle divalent en positions 4,4', 1,1'-biphényle divalent en positions 3,4'.
- ,1,4-naphthylène, 1,5-naphthylène et 2,6-naphthylène, et encore préférentiellement désignent indépendamment le 1,3-phénylène et le 1,4-phénylène ; et,
- pour tout i, Zᵢ désigne indépendamment un atome d'oxygène, un atome de soufre, un groupe alkylène, tel que -CH₂- ou isopropylène (-C(CH₃)₂-), un groupe carbonyle ou un groupe sulfonyle, préférentiellement Zᵢ désigne indépendamment un atome d'oxygène ou un groupe carbonyle, et encore préférentiellement désigne un groupe carbonyle.

3. Procédé de fabrication selon la revendication 2, dans lequel dans la formule chimique (II) :
- i est égal à 2 et n est égal à 1 ;
- X₁ et X₂ désignent tous les deux un atome de chlore ou un atome de fluor;
- Ar et Ar₂ désignent tous les deux un groupe 1,4-phénylène ;
- Ar₁ désigne un groupe 1,3-phénylène ou 1,4-phénylène ; et
- Z₁ et Z₂ désignent tous les deux un groupe carbonyle.

4. Procédé de fabrication selon l'une quelconque des revendications 1 à 3, dans lequel le composé B a pour formule chimique :
Ar'-O⁻ (III),
dans laquelle :
Ar' désigne un groupe aromatique monovalent, substitué ou non,
préférentiellement désigne un groupe aromatique monovalent choisi parmi la liste constituée de : phényle, biphényle monovalent et naphthyle.

5. Procédé de fabrication selon l'une quelconque des revendications 1 à 4, dans lequel le composé B est le phénolate.

6. Procédé selon l'une quelconque des revendications 1 à 5, dans lequel la proportion molaire de composé B par rapport au composé A est inférieure ou égale à 3 :1, préférentiellement inférieure ou égale à 2,5 :1, encore préférentiellement inférieure ou égale à 2,3 :1, et de manière extrêmement préférée d'environ 2 :1.

7. Procédé de fabrication selon l'une quelconque des revendications 1 à 6, dans lequel le composé B est obtenu par déprotonation de l'alcool aromatique B", acide conjugué de l'alcoolate aromatique B, par une base mise à réagir avec B", in-situ ou non, pour fournir le composé B ;
ladite base étant préférentiellement choisie parmi la liste constituée de : sels d'alcoolates, aromatiques ou aliphatiques, sels de carbonates, hydrures métalliques, et métaux alcalins.

8. Procédé de fabrication selon la revendication 7, dans lequel ladite base mise à réagir avec B" est un sel d'alcoolate, linéaire ou ramifié, comprenant de 3 à 10 atomes de carbone ;
préférentiellement ladite base est choisie dans la liste constituée des sels de :
iso-propanolate, 1,2-diméthylpropanolate, 1,1-diméthylpropanolate, 2,2-diméthylpropanolate, 1,1,2-triméthylpropanolate, 1,2,2-tri-méthylpropanolate, 1-éthyl-2-méthylpropanolate, 1-éthylpropanolate, n-butanolate, iso-butanolate, sec-butanolate, tert-butanolate, 2-méthylbutanolate, 3-méthylbutanolate, 1,2-diméthylbutanolate, 1,3-diméthylbutanolate, 2,3-diméthylbutanolate, 1,1-diméthyl-butanolate, 2,2-diméthylbutanolate, 3,3-diméthylbutanolate, 1-éthylbutanolate, 2-éthylbutanolate, 1-propylbutanolate, 1,1,3,3-tétraméthylbutanolate, n-pentanolate, 2-pentanolate, 2-méthylpentanolate, n-hexanolate, 2-hexanolate, 3-méthylpentanolate, 4-méthyl-pentanolate, 2-éthylpentanolate, 2-éthylhexanolate, 2-propylheptanolate, n-heptanolate, 2-heptanolate, 3-heptanolate, n-octanolate, et leur mélange ;
encore préférentiellement ladite base est choisie parmi la liste des sels d'iso-propanolate, de n-butanolate, de tert-butanolate, de n-heptanolate, de n-octanol, et leur mélange.

9. Procédé de fabrication selon la revendication 7, dans lequel ladite base mise à réagir avec B" est un sel de carbonate.

10. Procédé de fabrication selon l'une quelconque des revendications 7 à 9, dans lequel ladite base mise à réagir avec B" est un sel de métal alcalin, préférentiellement un sel de sodium, un sel de potassium ou un mélange de sels de sodium et de potassium.

11. Procédé de fabrication selon la revendication 7, dans lequel ladite base mise à réagir avec B" est du sodium métal ou du potassium métal, préférentiellement du sodium métal.

12. Procédé selon l'une quelconque des revendications 7 à 11, dans lequel la proportion molaire de ladite base, mise à réagir avec B", par rapport à B" est inférieure ou égale à 1:1.

13. Procédé de fabrication selon l'une quelconque des revendications 1 à 12, dans lequel le composé C a une polarité mesurée à 20°C supérieure ou égale à 3 Debyes, préférentiellement supérieure ou égale à 3,5 Debyes.

14. Procédé de fabrication selon l'une quelconque des revendications 1 à 13, dans lequel le composé C est choisi parmi la liste constituée des : C1-C6-alkyl-2-pyrrolidones, notamment la N-méthyl-2-pyrrolidone ou la N-butyl-2-pyrrolidone,
sulfoxydes, notamment le diméthylsulfoxyde ou le diéthylsulfoxyde, sulfones, notamment la diméthylsulfone, diéthylsulfone, la diisopropylsulfone, la diphénylsulfone ou encore la sulfone de tétraméthylène,
nitriles, notamment l'acétonitrile, le propionitrile ou le benzonitrile, N-diméthylamides, notamment le diméthylacetamide ou le diméthylformamide, et leur mélange.

15. Procédé selon l'une quelconque des revendications 1 à 14, dans lequel la proportion molaire de composé C par rapport au composé A est inférieure ou égale à 7,5 :1, préférentiellement inférieure ou égale à 5 :1, encore préférentiellement inférieure ou égale à 3 :1.

16. Procédé selon l'une quelconque des revendications 1 à 15, dans lequel le composé A est mis à réagir avec le composé B, en l'absence de tout solvant.

17. Procédé selon l'une quelconque des revendications 1 à 16, dans lequel le composé A est mis à réagir à l'état fondu avec le composé B.

18. Procédé de fabrication d'un polymère de poly-aryl-éther-cétone comprenant la fabrication d'un diéther aromatique selon l'une quelconque des revendications 1 à 17 ;
la réaction dudit diéther aromatique avec un composé D comprenant au moins deux groupements chlorure d'acyle.

19. Procédé selon la revendication 18, dans lequel le composé D est un composé ayant pour formule chimique :
ClC(O)-Ar-[Zⱼ-Arⱼ]ₘ-C(O)Cl (IV),
dans laquelle : j est un entier allant de 1 à 3 et m est un entier égal à 0 ou 1 ;
Ar et pour tout j, Arj désignent indépendamment un groupe aromatique divalent, substitué ou non, préférentiellement désigne un groupe aromatique divalent choisi parmi la liste constituée de : 1,3-phénylène, 1,4-phénylène, 1,1'-biphényle divalent en positions 4,4', 1,1'-biphényle divalent en positions 3,4', 1,4-naphthylène, 1,5-naphthylène et 2,6-naphthylène; et,
pour tout j, Zj désigne indépendamment un atome d'oxygène, un atome de soufre, un groupe alkylène, tel que -CH₂- ou isopropylène (-C(CH₃)₂-), ou un sulfone, préférentiellement Zj désigne un atome d'oxygène.

20. Procédé selon l'une quelconque des revendications 18 ou 19, dans lequel :
- ledit diéther aromatique est choisi parmi la liste constituée de : 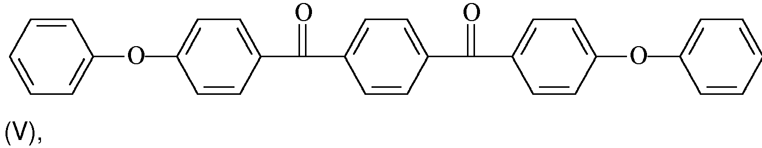 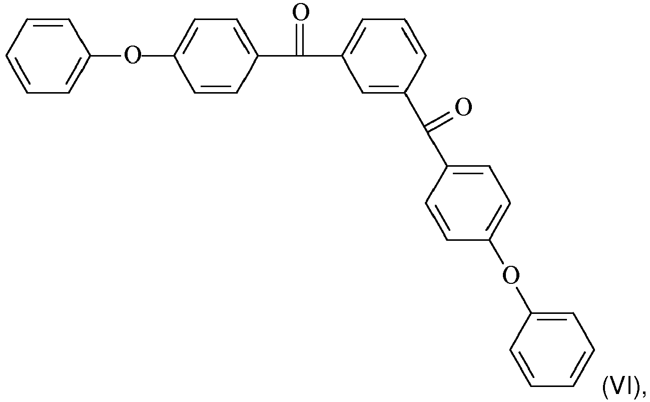 ou leur mélange ;
- ledit composé D est choisi parmi la liste de composés constituée de : 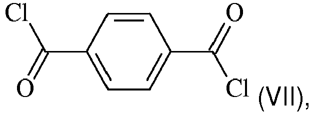 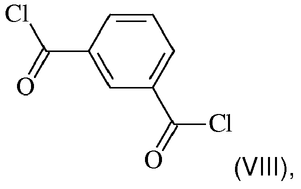 ou leur mélange.

21. Procédé selon l'une quelconque des revendications 14 et 15, dans lequel le composé C est la diphénylsulfone.

## Patentansprüche

1. Verfahren zur Herstellung eines aromatischen Diethers, umfassend die Umsetzung einer Verbindung A mit mindestens zwei halogenierten aromatischen Gruppen mit einer Verbindung B, wobei es sich bei B um ein aromatisches Alkoholat handelt,
gegebenenfalls in Gegenwart einer Verbindung C, die als Reaktionslösungsmittel fungiert,
wobei das molare Verhältnis von Verbindung B zu Verbindung A mindestens 2:1 beträgt und die molare Menge von Verbindung C, bezogen auf Verbindung A, gegebenenfalls höchstens 10:1 beträgt.

2. Herstellungsverfahren nach Anspruch 1, wobei es sich bei der Verbindung A um eine Verbindung mit der folgenden chemischen Formel handelt:
X₁-Ar-[Zᵢ-Arᵢ]ₙ-X₂ (II),
wobei:
- i eine ganze Zahl im Bereich von 1 bis 3 ist und n eine ganze Zahl mit einem Wert von 0 oder 1 ist;
- X₁ und X₂ unabhängig für ein Halogenatom stehen, vorzugsweise für das gleiche Halogenatom stehen und weiter bevorzugt beide für ein Chlor oder ein Fluor stehen;
- Ar und Arᵢ für jedes i unabhängig für eine gegebenenfalls substituierte zweiwertige aromatische Gruppe stehen, vorzugsweise unabhängig für eine zweiwertige aromatische Gruppe stehen, die aus der Liste bestehend aus 1,3-Phenylen, 1,4-Phenylen, 1,1'-Biphenyl, das in den Positionen 4,4' zweiwertig ist, 1,1'-Biphenyl, das in den Positionen 3,4' zweiwertig ist,
- 1,4-Naphthylen, 1,5-Naphthylen und 2,6-Naphthylen ausgewählt ist, und weiter bevorzugt unabhängig für 1,3-Phenylen und 1,4-Phenylen stehen; und
- Zᵢ für jedes i unabhängig für ein Sauerstoffatom, ein Schwefelatom, eine Alkylengruppe, wie -CH₂- oder Isopropylen (-C(CH₃)₂-), eine Carbonylgruppe oder eine Sulfonylgruppe steht, vorzugsweise Zᵢ unabhängig für ein Sauerstoffatom oder eine Carbonylgruppe steht und noch weiter bevorzugt für eine Carbonylgruppe steht.

3. Herstellungsverfahren nach Anspruch 2, wobei in der chemischen Formel (II):
- i gleich 2 ist und n gleich 1 ist;
- X₁ und X₂ beide für ein Chloratom oder ein Fluoratom stehen;
- Ar und Ar₂ beide für eine 1,4-Phenylengruppe stehen;
- Ar₁ für eine 1,3-Phenylen- oder 1,4-Phenylengruppe steht und
- Z₁ und Z₂ beide für eine Carbonylgruppe stehen.

4. Herstellungsverfahren nach einem der Ansprüche 1 bis 3, wobei die Verbindung B die folgende chemische Formel aufweist:
Ar'-O⁻ (III),
wobei:
Ar' für eine gegebenenfalls substituierte einwertige aromatische Gruppe steht, vorzugsweise für eine einwertige aromatische Gruppe, die aus der Liste bestehend aus Phenyl, einwertigem Biphenyl und Naphthyl ausgewählt ist, steht.

5. Herstellungsverfahren nach einem der Ansprüche 1 bis 4, wobei es sich bei der Verbindung B um Phenolat handelt.

6. Verfahren nach einem der Ansprüche 1 bis 5, wobei das molare Verhältnis von Verbindung B zu Verbindung A kleiner oder gleich 3:1, vorzugsweise kleiner oder gleich 2,5:1, weiter bevorzugt kleiner oder gleich 2,3:1, ist und ganz besonders bevorzugt ungefähr 2:1 beträgt.

7. Herstellungsverfahren nach einem der Ansprüche 1 bis 6, wobei die Verbindung B durch Deprotonierung des aromatischen Alkohols B", der konjugierten Säure des aromatischen Alkoholats B, mit einer Base, die in situ oder nicht in situ mit B'' zu Verbindung B umgesetzt wird, erhalten wird;
wobei die Base vorzugsweise aus der Liste bestehend aus aromatischen oder aliphatischen Alkoholatsalzen, Carbonatsalzen, Metallhydriden und Alkalimetallen ausgewählt wird.

8. Herstellungsverfahren nach Anspruch 7, wobei es sich bei der mit B'' umgesetzten Base um ein lineares oder verzweigtes Alkoholatsalz mit 3 bis 10 Kohlenstoffatomen handelt;
vorzugsweise die Base aus der Liste bestehend aus Salzen von Isopropanolat, 1,2-Dimethylpropanolat, 1,1-Dimethylpropanolat, 2,2-Dimethylpropanolat, 1,1,2-Trimethylpropanolat, 1,2,2-Trimethylpropanolat, 1-Ethyl-2-methylpropanolat, 1-Ethylpropanolat, n-Butanolat, Isobutanolat, sec-Butanolat, tert-Butanolat, 2-Methylbutanolat, 3-Methylbutanolat, 1,2-Dimethylbutanolat, 1,3-Dimethylbutanolat, 2,3-Dimethylbutanolat, 1,1-Dimethylbutanolat, 2,2-Dimethylbutanolat, 3,3-Dimethylbutanolat, 1-Ethylbutanolat, 2-Ethylbutanolat, 1-Propylbutanolat, 1,1,3,3-Tetramethylbutanolat, n-Pentanolat, 2-Pentanolat, 2-Methylpentanolat, n-Hexanolat, 2-Hexanolat, 3-Methylpentanolat, 4-Methylpentanolat, 2-Ethylpentanolat, 2-Ethylhexanolat, 2-Propylheptanolat, n-Heptanolat, 2-Heptanolat, 3-Heptanolat, n-Octanolat und einer Mischung davon ausgewählt wird;
weiter bevorzugt die Base aus der Liste bestehend aus Salzen von Isopropanolat, n-Butanolat, tert-Butanolat, n-Heptanolat, n-Octanolat und einer Mischung davon ausgewählt wird.

9. Herstellungsverfahren nach Anspruch 7, wobei es sich bei der mit B'' umgesetzten Base um ein Carbonatsalz handelt.

10. Herstellungsverfahren nach einem der Ansprüche 7 bis 9, wobei es sich bei der mit B" umgesetzten Base um ein Alkalimetallsalz, vorzugsweise ein Natriumsalz, ein Kaliumsalz oder eine Mischung von Natrium- und Kaliumsalzen handelt.

11. Herstellungsverfahren nach Anspruch 7, wobei es sich bei der mit B'' umgesetzten Base um Natriummetall oder Kaliummetall, vorzugsweise Natriummetall, handelt.

12. Verfahren nach einem der Ansprüche 7 bis 11, wobei das molare Verhältnis der mit B" umgesetzten Base, bezogen auf B", kleiner oder gleich 1:1 ist.

13. Herstellungsverfahren nach einem der Ansprüche 1 bis 12, wobei die Verbindung C eine bei 20 °C gemessene Polarität größer oder gleich 3 Debye, vorzugsweise größer oder gleich 3,5 Debye, aufweist.

14. Herstellungsverfahren nach einem der Ansprüche 1 bis 13, wobei die Verbindung C aus der Liste bestehend aus C1-C6-Alkyl-2-pyrrolidonen, insbesondere N-Methyl-2-pyrrolidon oder N-Butyl-2-pyrrolidon,
Sulfoxiden, insbesondere Dimethylsulfoxid oder Diethylsulfoxid,
Sulfonen, insbesondere Dimethylsulfon, Diethylsulfon, Diisopropylsulfon, Diphenylsulfon oder auch Tetramethylensulfon,
Nitrilen, insbesondere Acetonitril, Propionitril oder Benzonitril,
N-Dimethylamiden, insbesondere Dimethylacetamid oder Dimethylformamid,
und einer Mischung davon ausgewählt wird.

15. Verfahren nach einem der Ansprüche 1 bis 14, wobei der molare Anteil von Verbindung C, bezogen auf Verbindung A, kleiner oder gleich 7,5:1, vorzugsweise kleiner oder gleich 5:1, weiter bevorzugt kleiner oder gleich 3:1, ist.

16. Verfahren nach einem der Ansprüche 1 bis 15, wobei die Verbindung A in Abwesenheit von jeglichem Lösungsmittel mit der Verbindung B umgesetzt wird.

17. Verfahren nach einem der Ansprüche 1 bis 16, wobei die Verbindung A in schmelzflüssigem Zustand mit der Verbindung B umgesetzt wird.

18. Verfahren zur Herstellung eines Polyaryletherketon-Polymers, das Folgendes umfasst:
die Herstellung eines aromatischen Diethers nach einem der Ansprüche 1 bis 17;
die Umsetzung des aromatischen Diethers mit einer Verbindung D mit mindestens zwei Acylchloridgruppen.

19. Verfahren nach Anspruch 18, wobei es sich bei der Verbindung D um eine Verbindung mit der folgenden chemischen Formel handelt:
ClC(O)-Ar-[Zⱼ-Arⱼ]ₘ-C(O)Cl (IV),
wobei: j eine ganze Zahl im Bereich von 1 bis 3 ist und
m eine ganze Zahl mit einem Wert von 0 oder 1 ist;
- Ar und Arⱼ für jedes j unabhängig für eine gegebenenfalls substituierte zweiwertige aromatische Gruppe stehen, vorzugsweise eine zweiwertige aromatische Gruppe stehen, die aus der Liste bestehend aus 1,3-Phenylen, 1,4-Phenylen, 1,1'-Biphenyl, das in den Positionen 4,4' zweiwertig ist, 1,1'-Biphenyl, das in den Positionen 3,4' zweiwertig ist, 1,4-Naphthylen, 1,5-Naphthylen und 2,6-Naphthylen ausgewählt ist; und
- Zⱼ für jedes j unabhängig für ein Sauerstoffatom, ein Schwefelatom, eine Alkylengruppe, wie -CH₂- oder Isopropylen (-C(CH₃)₂-), oder ein Sulfon steht, vorzugsweise Zⱼ für ein Sauerstoffatom steht.

20. Verfahren nach einem der Ansprüche 18 oder 19, wobei:
- der aromatische Diether aus der Liste bestehend aus: 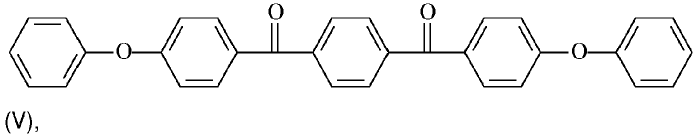 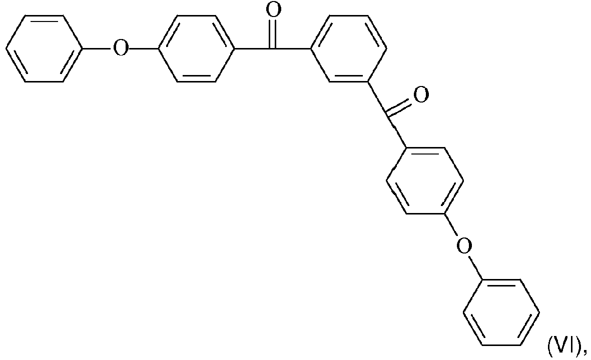 oder einer Mischung davon ausgewählt wird;
- die Verbindung D aus der Liste von Verbindungen bestehend aus: 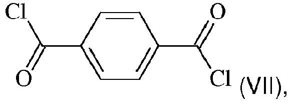 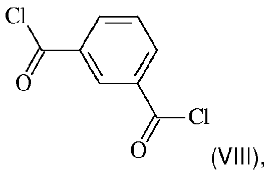 oder einer Mischung davon ausgewählt wird.

21. Verfahren nach einem der Ansprüche 14 und 15, wobei es sich bei der Verbindung C um Diphenylsulfon handelt.

## Claims

1. Process for manufacturing an aromatic diether, comprising the reaction of a compound A comprising at least two halogenated aromatic groups with a compound B, B being an aromatic alkoxide,
optionally in the presence of a compound C acting as reaction solvent,
the molar proportion of compound B to compound A being at least 2:1 and the molar amount of compound C to compound A being, where appropriate, not more than 10:1.

2. Manufacturing process according to Claim 1, in which compound A is a compound having the chemical formula:
X₁-Ar-[Zᵢ-Arᵢ]ₙ-X₂ (II),
in which:
- i is an integer ranging from 1 to 3, and n is an integer equal to 0 or 1;
- X₁ and X₂ independently denote a halogen atom, preferentially denote the same halogen atom and more preferentially both denote a chlorine or a fluorine;
- Ar and, for any i, Arᵢ independently denote a substituted or unsubstituted divalent aromatic group, and preferentially independently denote a divalent aromatic group chosen from the list consisting of: 1,3-phenylene, 1,4-phenylene, 1,1'-biphenyl divalent in the 4,4' positions, 1,1'-biphenyl divalent in the 3,4' positions;
- 1,4-naphthylene, 1,5-naphthylene and 2,6-naphthylene, and more preferentially independently denote 1,3-phenylene and 1,4-phenylene; and
- for any i, Zᵢ independently denotes an oxygen atom, a sulfur atom, an alkylene group, such as -CH₂- or isopropylene (-C(CH₃)₂-), a carbonyl group or a sulfonyl group; preferentially, Zᵢ independently denotes an oxygen atom or a carbonyl group, and more preferentially denotes a carbonyl group.

3. Manufacturing process according to Claim 2, in which, in the chemical formula (II):
- i is equal to 2 and n is equal to 1;
- X₁ and X₂ both denote a chlorine atom or a fluorine atom;
- Ar and Ar₂ both denote a 1,4-phenylene group;
- Ar₂ denotes a 1,3-phenylene or 1,4-phenylene group; and
- Z₂ and Z₂ both denote a carbonyl group.

4. Manufacturing process according to any one of Claims 1 to 3, in which compound B has the chemical formula:
Ar'-O⁻ (III),
in which:
Ar' denotes a substituted or unsubstituted monovalent aromatic group, preferentially denotes a monovalent aromatic group chosen from the list consisting of: phenyl, monovalent biphenyl and naphthyl.

5. Manufacturing process according to any one of Claims 1 to 4, in which compound B is phenoxide.

6. Process according to any one of Claims 1 to 5, in which the molar proportion of compound B to compound A is less than or equal to 3:1, preferentially less than or equal to 2.5:1, more preferentially less than or equal to 2.3:1, and extremely preferably about 2:1.

7. Manufacturing process according to any one of Claims 1 to 6, in which compound B is obtained by deprotonation of the aromatic alcohol B", the conjugate acid of the aromatic alkoxide B, with a base reacted with B", *in situ* or ex *situ,* to give compound B;
said base being preferentially chosen from the list consisting of: aromatic or aliphatic alkoxide salts, carbonate salts, metal hydrides, and alkali metals.

8. Manufacturing process according to Claim 7, in which said base reacted with B" is a linear or branched alkoxide salt comprising from 3 to 10 carbon atoms; preferentially, said base is chosen from the list consisting of salts of:
isopropoxide, 1,2-dimethylpropoxide, 1,1-dimethylpropoxide, 2,2-dimethylpropoxide, 1,1,2-trimethylpropoxide, 1,2,2-trimethylpropoxide, 1-ethyl-2-methylpropoxide, 1-ethylpropoxide, n-butoxide, isobutoxide, sec-butoxide, tert-butoxide, 2-methylbutoxide, 3-methylbutoxide, 1,2-dimethylbutoxide, 1,3-dimethylbutoxide, 2,3-dimethylbutoxide, 1,1-dimethylbutoxide, 2,2-dimethylbutoxide, 3,3-dimethylbutoxide, 1-ethylbutoxide, 2-ethylbutoxide, 1-propylbutoxide, 1,1,3,3-tetramethylbutoxide, n-pentoxide, 2-pentoxide, 2-methylpentoxide, n-hexoxide, 2-hexoxide, 3-methylpentoxide, 4-methylpentoxide, 2-ethylpentoxide, 2-ethylhexoxide, 2-propylheptoxide, n-heptoxide, 2-heptoxide, 3-heptoxide, n-octoxide, and mixtures thereof;
more preferentially, said base is chosen from the list of salts of isopropoxide, n-butoxide, tert-butoxide, n-heptoxide, n-octoxide, and a mixture thereof.

9. Manufacturing process according to Claim 7, in which said base reacted with B" is a carbonate salt.

10. Manufacturing process according to any one of Claims 7 to 9, in which said base reacted with B" is an alkali metal salt, preferentially a sodium salt, a potassium salt or a mixture of sodium and potassium salts.

11. Manufacturing process according to Claim 7, in which said base reacted with B" is sodium metal or potassium metal, preferentially sodium metal.

12. Process according to any one of Claims 7 to 11, in which the molar proportion of said base reacted with B'' relative to B'' is less than or equal to 1:1.

13. Manufacturing process according to any one of Claims 1 to 12, in which compound C has a polarity measured at 20°C of greater than or equal to 3 Debyes, preferentially greater than or equal to 3.5 Debyes.

14. Manufacturing process according to any one of Claims 1 to 13, in which compound C is chosen from the list consisting of: C1-C6-alkyl-2-pyrrolidones, notably N-methyl-2-pyrrolidone or N-butyl-2-pyrrolidone, sulfoxides, notably dimethyl sulfoxide or diethyl sulfoxide,
sulfones, notably dimethyl sulfone, diethyl sulfone, diisopropyl sulfone, diphenyl sulfone or tetramethylene sulfone,
nitriles, notably acetonitrile, propionitrile or benzonitrile,
N-dimethylamides, notably dimethylacetamide or dimethylformamide,
and a mixture thereof.

15. Process according to any one of Claims 1 to 14, in which the molar proportion of compound C to compound A is less than or equal to 7.5:1, preferentially less than or equal to 5:1, more preferentially less than or equal to 3:1.

16. Process according to any one of Claims 1 to 15, in which compound A is reacted with compound B, in the absence of any solvent.

17. Process according to any one of Claims 1 to 16, in which compound A is reacted in molten form with compound B.

18. Process for manufacturing a polyaryl ether ketone polymer, comprising:
the manufacture of an aromatic diether according to any one of Claims 1 to 17 ;
the reaction of said aromatic diether with a compound D comprising at least two acyl chloride groups.

19. Process according to Claim 18, in which compound D is a compound having the chemical formula:
ClC(O)-Ar-[Zⱼ-Arⱼ]ₘ-C(O)Cl (IV),
in which: j is an integer ranging from 1 to 3 and m is an integer equal to 0 or 1;
Ar and, for any j, Arⱼ independently denote a substituted or unsubstituted divalent aromatic group, preferentially denote a divalent aromatic group chosen from the list consisting of: 1,3-phenylene, 1,4-phenylene, 1,1'-biphenyl divalent in the 4,4' positions, 1,1'-biphenyl divalent in the 3,4' positions, 1,4-naphthylene, 1,5-naphthylene and 2,6-naphthylene; and,
for any j, Zj independently denotes an oxygen atom, a sulfur atom, an alkylene group, such as -CH₂- or isopropylene (-C(CH₃)₂-), or a sulfone; preferentially, Zj denotes an oxygen atom.

20. Process as according to either of Claims 18 and 19, in which:
- said aromatic diether is chosen from the list consisting of: 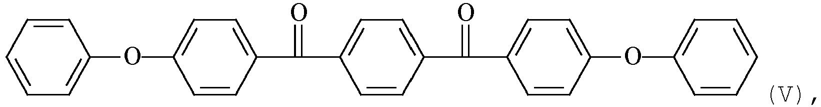 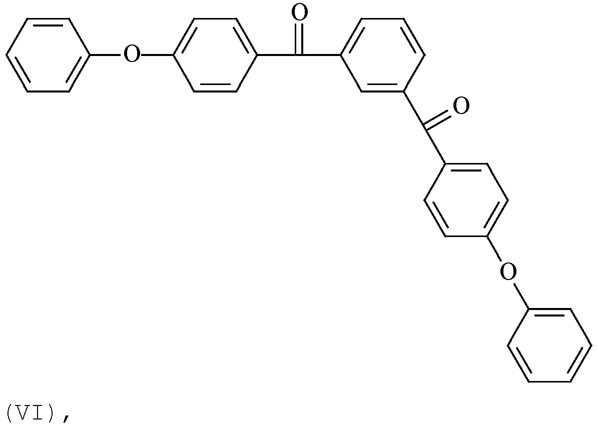 or a mixture thereof;
- said compound D is chosen from the list of compounds consisting of : 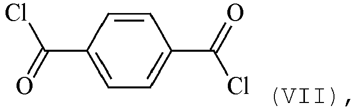 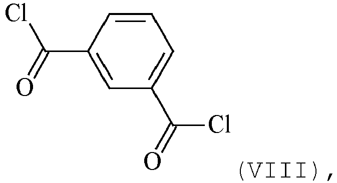 or a mixture thereof.

21. Process according to either of Claims 14 and 15, in which compound C is diphenyl sulfone.
